# EUROPEAN PATENT SPECIFICATION

(11) **EP 4 292 066 B1**
(45) Date of publication and mention of the grant of the patent: **01.04.2026**
(21) Application number: 22710722.4
(22) Date of filing: 15.02.2022
(51) Int. Cl.: G07F 11/50, G07F 17/00, G07F 11/00, G07F 11/60, A61G 12/00

(54) **SYSTEM FOR THE STORAGE AND AUTOMATIC MOVEMENT OF MEDICINES**
SYSTEM ZUR LAGERUNG UND AUTOMATISCHEN BEWEGUNG VON ARZNEIMITTELN
SYSTÈME POUR LE STOCKAGE ET LE DÉPLACEMENT AUTOMATIQUES DE MÉDICAMENTS

(30) Priority: 15.02.2021 IT 202100003341; 15.02.2021 IT 202100003374; 21.06.2021 IT 202100016235
(43) Date of publication of application: 20.12.2023
(73) Proprietor: Antares Vision S.p.A., 25039 Travagliato (BS) (IT)
(72) Inventor: PIOVANELLI, Andrea, 25039 Travagliato (BS) (IT); FUSCO, Adriano, 25039 Travagliato (BS) (IT); MARTINELLI, Andrea, 25039 Travagliato (BS) (IT)
(74) Representative: Brunacci, Marco
(86) International application number: PCT/IB2022/051324
(87) International publication number: WO 2022/172254

(56) References cited:
- WO-A1-01/97745
- GB-A- 2 564 672
- US-A1- 2005 035 138
- US-A1- 2007 078 562

## Description

### Technical Field

The present invention relates to a system for the storage and automatic movement of medicines. More particularly, the present invention relates to a system to move and track in an automated manner the medicines and the trays containing them between the central cabinets, the ward cabinets and the inpatient rooms in hospital environments.

The system of the present invention finds its preferred, but not exclusive, application in hospitals.

In the remainder of the present description and in the subsequent claims, "medicine" means both a product and/or a preparation having curative properties, and medical devices meant as instruments used for diagnostic and/or therapeutic purpose. In the remainder of the text, different terms may be used which are to be considered as synonyms such as, e.g., drug, medicament, treatment, etc. without altering the meaning or purpose thereof. It should also be noted that the dispensing of a drug may be carried out by means of prior packaging inside a blister pack, box, bottle, syringe or other similar container/package before being administered to a patient.

### Background Art

Automatic dispensing and tracking systems of medicines are known which are carried out through automated cabinets/warehouses and/or smart trolleys, even operating in conjunction with each other.

For example, smart trolleys and cabinets intended for dispensing drugs for independent pickup by a user upon authorization are known from US 2008/077274 A1, EP 4243 481 A1, and WO 2016/090315 A1.

A system for the control of hospital activities of laboratory testing, drug treatment, feeding and instrumental diagnostics operating under secure conditions to prevent the exchange of drugs intended for patients is known, e.g., from WO 01/97745 A1. The described system comprises a bed unit, a cabinet unit, a computerized trolley provided with a code reader, a computer and a database communicating with each other to make controlled opening of the trolley's drawers containing the drugs to be administered to a patient.

In the field of product tracking, WO 2007/029110 A1 and WO 2014/122578 A1 generally describe the systems for recognizing and tracking medicines using RFID identification.

US 2005/035138 discloses a system for the storage and movement of medicines comprising a plurality of trays and a ward cabinet.

However, the currently known technologies for the control, tracking and exchange of medicines inside the hospital environments have several drawbacks.

First of all, one of the most problematic aspects of the transfer of medicines is the lack of automatic cooperation between the storage cabinets of the drugs and the ward trolleys. Currently, the drugs are picked manually from the ward cabinets as well as their insertion into the trolleys. Operators, in fact, are allowed a facilitated and automated pickup from the cabinets, depending on the wards to be supplied, but the loading of the trolleys is still done manually drug by drug.

Moreover, in the case of the need to control larger quantities of drugs at the same time, for example when the pickup is made from the central cabinets (or otherwise known as "pharmacy cabinets") towards the peripheral ward cabinets, the transfer is always done manually, taking all the drugs of the ward to put them in simple boxes or baskets which are then transported by hand (or with trolleys) to be then inserted, again manually, in the ward cabinets.

### Description of the Invention

The Applicant, faced with the aforementioned issues, has come up with the idea of developing a system that allows for tracked transfers of medicines and medical devices which are effortless for operators and that allows for the automatic exchange of the medicines between cabinets and trolleys.

The Applicant has also developed a system configured to move and transfer the drugs indirectly, that is, avoiding the handling of packages and/or blister packs that have different shapes and sizes from drug to drug, operating therefore only through special trays of predetermined size in order to create a univocal association between the latter and one or more predefined drugs to be administered.

This and other objects have been developed by the present invention covering the system for the automatic movement of medicines according to claim 1 and having structural and functional characteristics such as to satisfy the aforementioned requirements and, at the same time, to obviate the drawbacks mentioned with reference to the prior art.

### Brief Description of the Drawings

Other characteristics and advantages of the present invention will be more apparent from the following description of a preferred, but not exclusive, embodiment illustrated by way of an indicative, yet non-limiting example, in the accompanying tables of drawings wherein:
- Figure 1 is a schematic view of the system for the storage and automatic movement of medicines according to the invention,
- Figures 2, 3 and 4 are perspective views of the ward cabinet,
- Figures 5 and 6 are perspective views of the central cabinet,
- Figures 7-17 are views of the various embodiments of the ward trolley according to the present invention.

### Embodiments of the Invention

With particular reference to such figures, a system for the storage and automatic movement of medicines according to the present inventior is indicated.

The system comprises a ward cabinet 100 preferably installed/positioned inside a hospital ward and a ward trolley 200 intended to operate in conjunction with the ward cabinet 100 to pick up, store and transfer the medicines from the ward cabinet 100 to inpatient rooms of the hospital ward and vice versa via said ward trolley 200.

With reference to the ward cabinet 100 illustrated in the examples of the attached figures, it comprises a frame 103 having a mainly horizontal development along a longitudinal direction X that bounds a housing compartment 104. The frame 103 is defined as a whole by four side walls (a front wall 105, a rear wall 106 and two side walls 107, 108), a base 109 and an upper top 110.

In the context of the present disclosure, the terms "upper" and "lower", "front", "rear", "vertical" and "horizontal", shall be understood to refer to the conditions of normal use of the ward cabinet 100, i.e., those in which it is arranged to rest on the ground.

The ward cabinet 100 also comprises a movement assembly 102, preferably of the type of a Cartesian robot, capable of shifting along the three axes X, Y, Z inside the ward cabinet 100 which is configured for the storage and movement of the drugs. In detail, the movement assembly 102 is arranged internally to the housing compartment 104 and is configured for the movement of a plurality of trays 10 intended to house at least one medicine to be administered to a patient.

The movement assembly 102 is also provided with gripping means 112 for gripping a tray 10 between a tray storage position A and a tray delivery position B.

Preferably, the gripping means 112 are configured for gripping one tray 10 at a time between the tray storage position A and the tray delivery position B. To this end, the storage position A is placed at the point where at least one of the walls 106, 107, 108, 109 is located wherein there are a plurality of supports 113, overlapping and side by side with each other, wherein each support 113 is preferably associated with a single tray 10. Other embodiments cannot however be ruled out wherein the supports 113 are associated with several trays 10 at the same time.

According to one embodiment, the supports 113 may comprise storage cells configured to house one or more trays 10 inside them or shelves arranged one on top of the other where the trays 10 are laid side by side.

With reference to the tray delivery position B, the latter is preferably arranged in a wall other than the wall where the supports 113 are organized. In detail, the delivery position B corresponds to the area close to a delivery opening 114 formed in the front wall 105 of the cabinet 100 which serves as a passageway for the trays 10, while the tray storage position A is the position close to a predefined support 113 associated with one of the walls of the ward cabinet 100 (in particular the inner side of said walls).

According to a preferred embodiment, the supports 113 are positioned at the point where the rear wall 106 is located opposite the inner side of the front wall 105 of the cabinet 100. Other embodiments cannot however be ruled out wherein the supports 113 are also associated with other walls. For example, it may be provided that all of the walls of the ward cabinet 100 are provided (or partly provided) with supports 113, or only one or some of them. In one embodiment, the supports 113 may also be arranged around the delivery opening 114 at the point where the front wall 105 of the cabinet 100 is located.

Preferably, the movement assembly 102 is configured to make one tray 10 passing at a time through the delivery opening 114. In this context, the movement assembly 102 is configured to move the gripping means 112 between the tray storage position A, wherein the gripping means 112 are close to a predefined support 113 to allow the association (e.g., attachment/release) of a respective tray 10 to the support 113, and the tray delivery position B, wherein the gripping means 112 are close to the delivery opening 114 to allow the passage of the tray 10 through said opening 114.

As shown, the movement assembly 102 comprises a vertical bar 115 coupled, in a sliding manner, to one or more tracks attached to the base 109 and/or to the upper top 110 of the ward cabinet 100 with the purpose of making the bar 115 shift along a longitudinal direction X. The vertical bar 115 serves as a support for the gripping means 112 which are coupled thereto in a sliding manner along a vertical direction Z.

According to one embodiment, the gripping means 112 may also rotate around the vertical bar 115 to pick up/deliver the trays even from supports 113 arranged on different walls, e.g. facing each other in the case of a cabinet 100 being provided with supports attached to several walls.

Conveniently, the gripping means 112 are provided with a manipulator 116 configured for the actual grip and subsequent release of the trays 10.

Preferably, the manipulator 116 is provided with grippers 117, 18 that are movable close to and away from each other to grasp, preferably, a single tray 10. Additionally, the grippers 117, 118 are also configured to shift horizontally so as to be able to move forward towards the supports 113 for gripping the trays 10. Other embodiments cannot, however, be ruled out wherein the manipulator 116 is configured to move several trays 10 simultaneously or to grasp the trays at different locations, for example, at the top, at the bottom or by means of suitable attachment means (not shown).

Once a tray 10 has been picked up from the tray storage position A, the movement assembly 102 is moved towards the tray delivery position B.

As anticipated above, the tray delivery position B is arranged at the point where the front wall 105 is located where the delivery opening 114 for the passage of the trays 10 is formed. In detail, the delivery position B is moved close to the delivery opening 114 so that the gripping means 112 can deliver the trays 10, preferably one tray at a time, to the ward trolley 200.

According to one embodiment, the ward cabinet 100 may have a plurality of cells, overlapping and side by side with each other, each to store a single tray 10. Each cell is provided with a pair of grooves or tracks adapted to receive the side edges of the tray 10 to support it.

It is useful to note that each tray 10 may contain medicines of various shapes and sizes, resulting in the need to have different sized housing spaces inside the cabinet.

In order to optimize the space inside the ward cabinet 100, preferably, the cells are positioned along the vertical direction with a predefined pitch substantially corresponding to the minimum height that can be occupied by a tray 10 containing a medicine. Obviously, in the case of trays containing drugs having greater height than the height of the single tray, a predefined number of cells may be left free, so as to store also the trays 10 occupying greater heights than the predefined pitch.

Conveniently, the movement assembly 102 of the cabinet may comprise a sensor capable of detecting the height of the tray 10 containing the drug, preferably discriminating the trays 10 with heights from 50mm to 100mm, so as to allow the ward cabinet 100 to optimize the storage of the trays 10.

Preferably, the trays 10 comprise a base which mainly extends along a longitudinal direction and serves as a support for one or more medicines. The base is bounded by two opposite side walls 11a, 11b, a front wall and a rear wall also opposite each other that rise peripherally from the base by a stretch of predetermined height. Preferably, the side walls 11a, 11b have greater length than the length of the front and rear walls.

Advantageously, the gripping means 112 of the ward cabinet 100 are designed to operate only over limited width ranges. Thus, the trays 10 are sized over predefined width ranges (corresponding to the distance between the side walls of the tray). As will be seen later in the present disclosure, the advantages are many:
- saving in design costs;
- lower amount of mechanical/electronic kinematics to control the opening/closing of the grippers 117, 118;
- lower maintenance costs;
- direct handling of trays;
- indirect handling of packages without complications on the control of different shapes and sizes from drug to drug.

Preferably, the trays 10 have two preferred widths. In detail, a first group of trays 10a comprises trays with a width between 5 cm and 18 cm, preferably 14 cm to house standard drug packages, while a second group of trays 10b comprises trays with a width between 10 cm and 30 cm, preferably 19 cm to house larger drug packages. Such dimensions allow the trays 10 to receive most of the drug formats available on the market, allowing the ward cabinet 100 and the ward trolley 200 to control the storage and the dispensing of a high quantity and variety of drugs easily and quickly. Different or additional embodiments cannot however be ruled out having groups of trays of different size in order to expand the possibilities of housing for even more types of packaging.

Preferably, the trays 10 have no more than five ranges of predefined width. In further detail, the gripping means 112 are configured to operate only on such ranges of predefined width.

As anticipated above, the delivery opening 114 of the ward cabinet 100 for the transfer of trays 10 is pass-through and is formed on one of the side walls 107, 108 of the frame 103, particularly on the front wall 105. The delivery opening 114 is preferably intended for the passage of one tray 10 at a time.

The delivery opening 114 is obtained at a distance from the ground comprised between 30 cm and 200 cm, preferably 80 cm taken with reference to the center of it.

As can be observed, the delivery opening 114 of the ward cabinet 100 has a size at least large enough to make one tray 10 pass at a time. However, as will be seen below, since the ward trolley 200 may have multiple movement assemblies side by side, its entry opening 249 has a width such that it can also simultaneously control several trays 10 side by side. It follows that the dimension of the delivery opening 114 of the cabinet 100 may also be sized complementary to and substantially similarly to the dimension of the opening 249 of the ward trolley 200, but possibly even smaller.

In one embodiment, the delivery opening 114 of the ward cabinet 100 has a framework 114a. Preferably, when it is necessary to transfer the trays 10 from the ward cabinet 100 to the ward trolley 200 and vice versa, the framework 114a is keyed at least partly into the opening 249 of the ward trolley 200 to achieve a coupling by shape thereto.

Advantageously, the grippers 117, 118 of the gripping means 112 are configured to transfer the trays 10 from the ward cabinet 100 to the ward trolley 200 and vice versa, preferably operating on one tray 10 at a time. In this case, the grippers 117, 118 operate by shifting towards the ward trolley 200 by extending beyond the front wall 105 of the ward cabinet 100 to pass at least partly through both the delivery opening 114 of the ward cabinet 100 and the entry opening 249 of the ward trolley 200. Once the tray 10 has at least partly entered the ward trolley 200, the grippers 117, 118 widen to release the tray 10 onto appropriate interfacing means 250 which take over the tray 10 for the subsequent storage thereof in the ward trolley 200.

It should be noted that the opening 114 of the ward cabinet 100 and the entry opening 249 of the ward trolley 200 are positioned substantially at the same height above the ground. Thus, the ward trolley 200 may interact with the ward cabinet 100 quickly and easily.

According to one embodiment, the ward cabinet 100 has a single delivery opening 114 for the delivery and transfer of the trays 10 to the ward trolley 200. According to one embodiment, the ward cabinet 100 may also be provided with an introduction unit of the medicines for the replenishment of the latter into the ward cabinet 100. The replenishment takes place through an inlet port 121 formed in the front wall, preferably arranged next to the delivery opening 114. The introduction/pickup unit of the medicines comprises a central control unit (not shown), a detection device 122 of the type of barcode reader or similar device for recognizing the drugs before they are introduced into the ward cabinet 100 and preferably installed at the point where the inlet port 121 is located. By reading the package barcodes, information about the type of medicine being introduced into the ward cabinet 100 can be sent to the central control unit, as well as possibly other information (e.g., serial, GTIN, expiry date, batch number, etc.). The medicines may be placed by an operator on a manual or semi-automatic conveyor belt 124 provided with the ward cabinet 100 in the proximity of the inlet port 121 to make the medicines available downstream of the port 121 to be picked up by the movement assembly 102 which will arrange and organize them on the supports 113.

The central control unit is preferably installed in the ward cabinet 100 and is configured to communicate with the hospital's central healthcare ICT architecture intended for controlling and tracking the medicines, the trays 10, the racks 15 as well as the cabinets 100, 300 and the trolleys 200, 400. In this way, information about medicines and their location inside the system and the hospital environment is always available and monitored by the central unit. The traceability of the medicines makes it possible to know at all times where the drug is, to whom it has been administered, from which trolley/cabinet, etc., with the upmost efficiency for inventory purposes and/or for possible recall actions.

Preferably, the central control unit of the cabinet may be used by an operator via a suitable interface connected thereto (e.g., a display 125, a smart-phone, a tablet, etc.) to generate one or more signals to be sent to the central control unit. In particular, the operators may enter the data of the medicines to be inserted in the cabinet 100 (or to be picked up) via the display 125 or directly with their smart-phone, tablet and/or pc.

Upon receipt of the univocal identification signal, e.g. after reading the medicines by means of the detection device 122, the central control unit activates the movement assembly 102 to insert the medicines into their respective tray 10 in order to store them in the supports 313.

Advantageously, each tray 10 comprises an identification element (not shown) that, as will be described in more detail later in this description, allows a univocal association to be created between the trays 10 and one or more medicines. For example, the identification element may be a tag, a RFID code, or the like. In a further embodiment, the association between the trays 10 and the medicines may be made directly via software without the use of tags.

Downstream of the inlet port 121, the movement assembly is configured to insert the medicines into one or more trays 10 which will be subsequently stored inside the ward cabinet 100 in the storage position B.

According to one embodiment, the medicine introduction unit may also be configured to allow an operator to interface directly with the ward cabinet 100 without the aid of a trolley for the pickup of trays or drugs as needed.

According to a further embodiment, the ward cabinet 100 is configured to also receive several trays 10 simultaneously. Receipt of such a plurality of trays 10 in the ward cabinet 100 may be carried out by an interchange trolley 400 which will be described in detail later in this detailed description. To this end, the system of the invention may comprise racks 15 intended to house a plurality of trays 10 to be moved to and from the ward cabinet 100.

Conveniently, the ward cabinet 100 may therefore be provided with an additional delivery opening 130, which is larger than the delivery opening 114, and which serves as a passageway for the interchange of racks 15 between the ward cabinet 100 and the interchange trolley 400. Preferably, the additional delivery opening 130 is formed in the front wall 105 of the cabinet 100 at the side of the delivery opening 114 and closable, if necessary, by an automatic shutter.

In the case of the additional delivery opening 130, the ward cabinet 100 may also not include the inlet port 121 for the manual replenishment of the drugs.

As anticipated above, the ward trolley 200 is intended to operate in conjunction with the ward cabinet 100 for the passage and transfer of the trays 10.

The ward trolley 200 comprises a body 201, having a mainly vertical development, bounding a housing compartment 221. The body 201 is defined as a whole by four side walls (a front wall 222, a rear wall 223 and two side walls 224a, 224b), a base 225 and an upper or worktop 226.

The base 225 of the ward trolley 200 comprises at least one wheel 227, preferably a swivel wheel, oriented downwardly to move the ward trolley 200 along at least one direction of forward movement.

Preferably, with the base 225 of the ward trolley 200 are associated four wheels 227, preferably swivel wheels, arranged substantially at the vertices of the base 225 to be able to move the ward trolley 200 along at least one direction of forward movement.

For this purpose, the ward trolley 200 is provided with a handlebar 228 which can be gripped by an operator to drive and displace the ward trolley 200 and preferably fixed at the rear wall 223. Alternative embodiments cannot however be ruled out wherein a pair of wheels 227 may be of a fixed type of orientation, e.g. with only the pair of front wheels pivoting or otherwise only the rear wheels.

Advantageously, the ward trolley 200 comprises an assisted driving device 230 configured to automatically adjust the speed of movement of the ward trolley 200 based on the thrust force operated on the trolley by the operator. In particular, the assisted driving device 230 comprises one or more motorized wheels to promote the movement of the ward trolley 200.

Conveniently, the device 230 is rotatable around its own vertical axis and allows the speed and direction of movement of the ward trolley 200 to be independently adjusted in order to displace it within the hospital ward even without an operator pushing it.

According to one embodiment, the ward trolley 200 is provided with a plurality of secondary accessories and of primary accessories intended to facilitate the work of healthcare providers. In this regard, the secondary accessories may, e.g., comprise a consumable holder assembly 231, waste containers, controlled access pockets and/or drawers 232, refrigerated drawer for temperature-controlled drugs, label printer, etc., while the primary accessories comprise, e.g., a scale 235, a camera 236, a display 237, processing means 238, operator identification system, etc., which will be described in detail later in the present description.

Conveniently, the consumable holder assembly 231 is fixed at the point where the worktop 226 is located and comprises a framework 231a supporting a plurality of housings 231b which can be opened and closed towards the worktop 226. In the illustrated embodiments, the preferably transparent housings 231b are hinged horizontally so as to be able to rotate at least partly outwardly in order not to reduce the space of the worktop 226 when open. Different embodiments cannot however be ruled out wherein the housings 231b comprise horizontally sliding drawers, e.g. with a controlled access, or compartments closed by small openable doors and hinged horizontally/vertically, as appropriate. Conveniently, the housings 231b are intended for the storage of disposable medical supplies such as, e.g., gauze, syringes, disinfectants, gloves, tourniquets, etc.

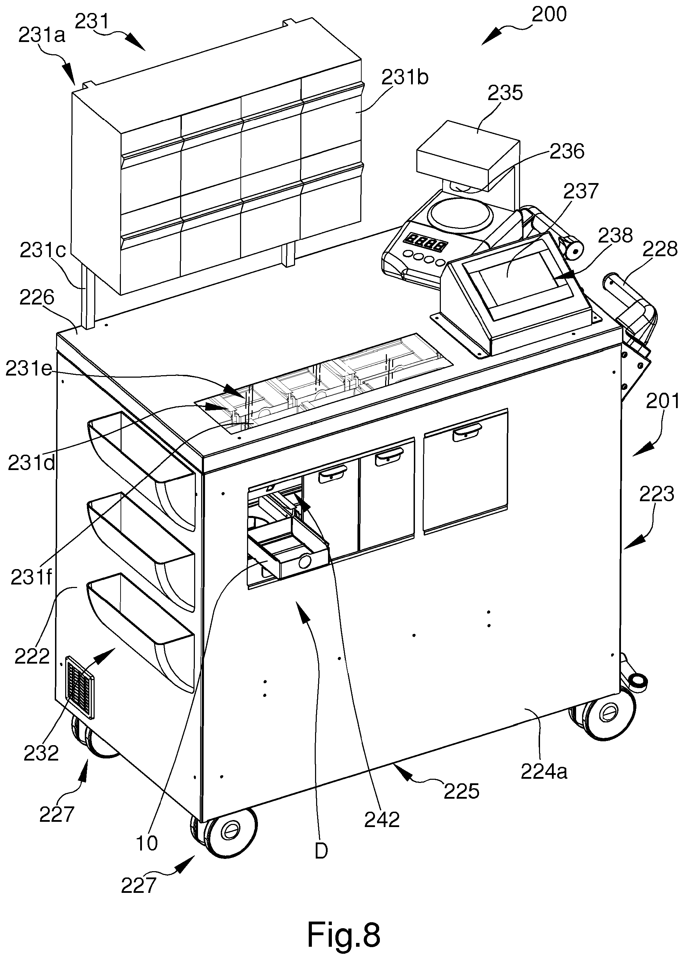

Advantageously, the consumable holder assembly 231 is lifted from the ward trolley 200 by means of one or more supporting rods 231c fixed to the worktop 226, preferably in a position close to one side of the ward trolley 200 (in the case shown in Figure 8, the right side with reference to the operator's point of observation) so that the surface of the latter is as free as possible in order to ensure that operators can use as much space as possible.

Conveniently, the worktop 226 may comprise a transparent portion, not shown, to allow the operator to look inside the ward trolley 200 the medicines that will gradually exit the trolley. For this purpose, the worktop 226 comprises an opening with which a glass, or similar transparent material, is associated. The opening is formed so as to leave one or more non-transparent portions of the worktop 226 around the transparent portion. The non-transparent portions are arranged inferiorly to the assembly 231 and at the point where the rear wall 223 is located so that instruments or healthcare objects in general may be placed or secured thereon.

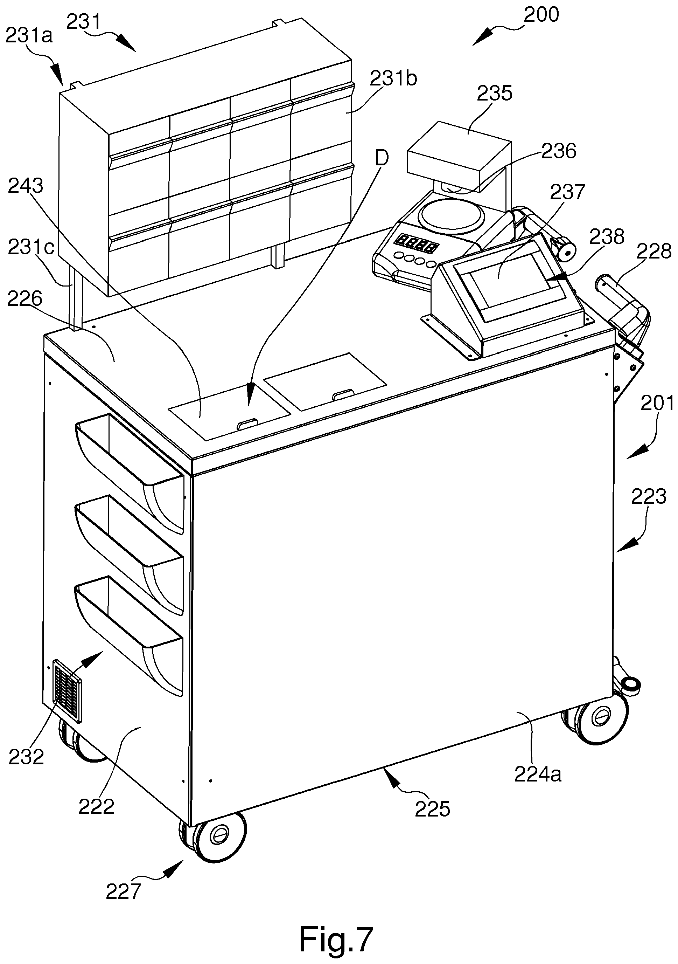

As shown in the examples of Figures 7-9, the ward trolley 200 may be provided with a plurality of pockets 232 fixed to the front wall 222 to be able to house paper documents, such as e.g. inpatient's medical records. In a preferred embodiment, the pockets 232 are three in number and fixed one above the other. Even more preferably, the pockets 232 have less width than the width of the front wall 222 and are arranged closer to one of the sides of the ward trolley 200, e.g. the left side, so as not to occupy all of the available wall space and to allow for other accessory elements for the trolley.

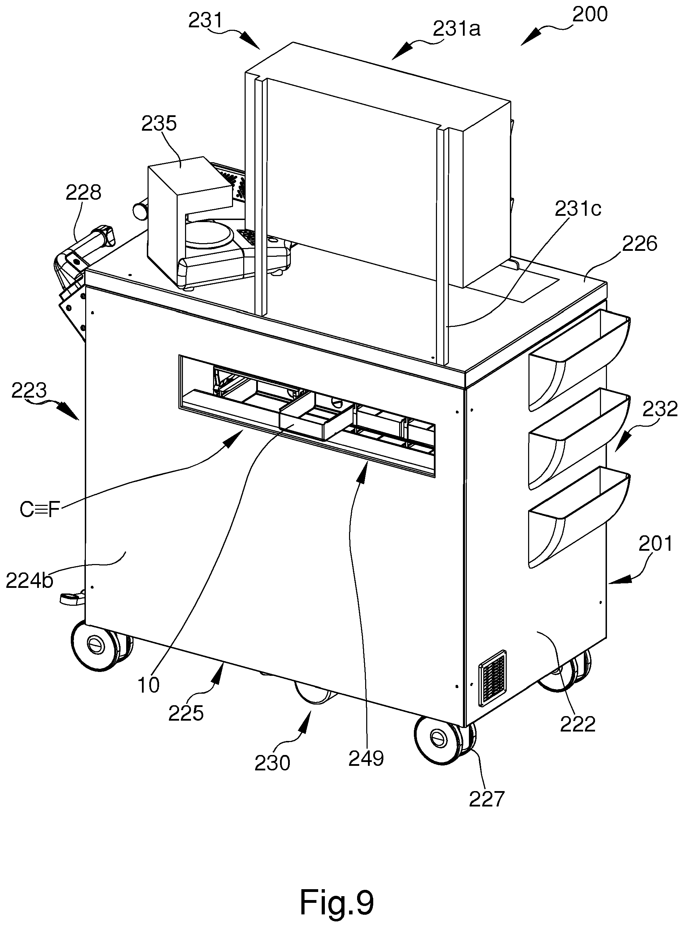

As shown in the examples in Figure 9, the ward trolley 200 may comprise one or more containers 232 for hospital waste. In a preferred embodiment, the container 232 is accessible via a side or upper opening which can be closed.

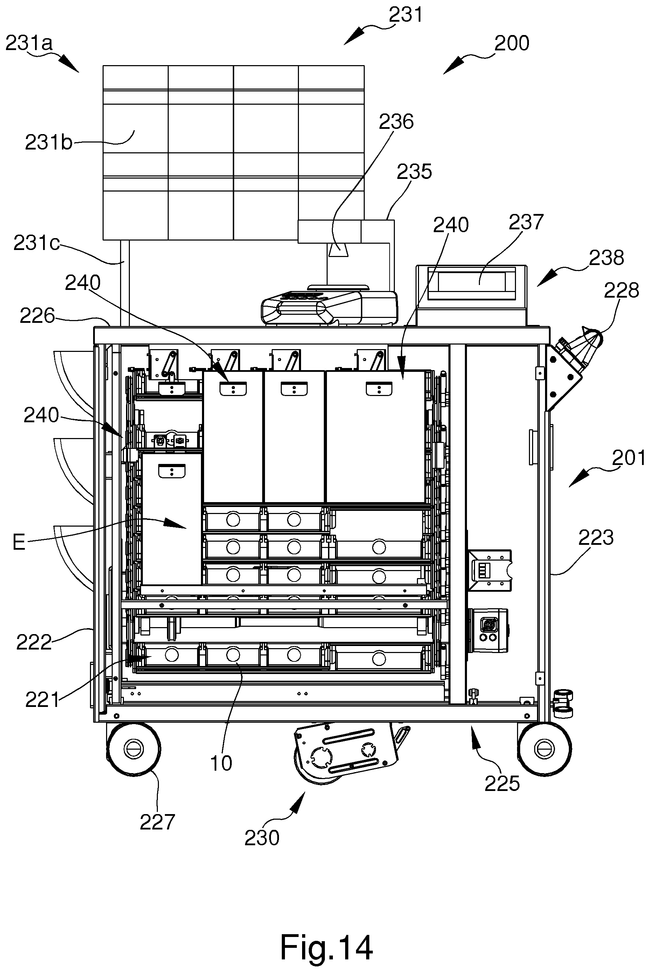

As shown in Figure 14, the ward trolley 200 may comprise a scale 235 configured to weigh drugs and/or any preparations prior to their administration to the patient.

As shown in Figure 14, the ward trolley 200 may comprise audio and/or video capture means 236 provided with at least one video capture appliance, such as e.g. a camera, webcam and the like, and/or at least one audio capture appliance, such as e.g. a microphone.

Alternative embodiments of the capture means 236 cannot however be ruled out wherein the video capture appliance and the audio capture appliance are implemented in a single electronic device configured for audio and video capture.

Conveniently, the camera 236 may be provided with a sensor, preferably an optical sensor, configured to detect, record, and/or count the drugs to be administered to a patient, or to automatically track the pickup or storage of a medicine from/into the ward trolley 200.

In one or more embodiments, the camera 236 is positioned superiorly to the scale 235 to record the weighed and picked-up drugs.

In one or more embodiments, the camera 236 is configured to record the activity performed by staff, such as e.g. the preparation and administration of therapies by nurses, for possible analysis and/or investigation.

In other words, the camera 236 continuously records, and therefore monitors, the activities carried out by the staff in order to verify the effective and regular performance thereof.

In one or more embodiments, the camera 236 is oriented to frame downwardly in the direction of the plate of the scale 235 and/or of the worktop 226 in order not to frame people's faces to maintain privacy of the same.

As shown in Figure 14, the ward trolley 200 may comprise at least one audio/video reproduction device 237. Preferably, the display 237 is of the touch screen type. As will be appreciated later in the present description, the display allows an operator to perform various interfacing operations with the ward trolley 200 and/or the hospital's central healthcare ICT architecture.

Appropriately, the ward trolley 200 may comprise an operator identification system which is adapted to identify which operator is picking up a drug from the ward trolley 200, and the patient to whom the picked-up drug is administered. In actual facts, the identification system records the operator picking up a drug by, for example, scanning the operator's badge, the drug picked up by the operator, and the patient to whom the drug is administered by, e.g., scanning their medical record.

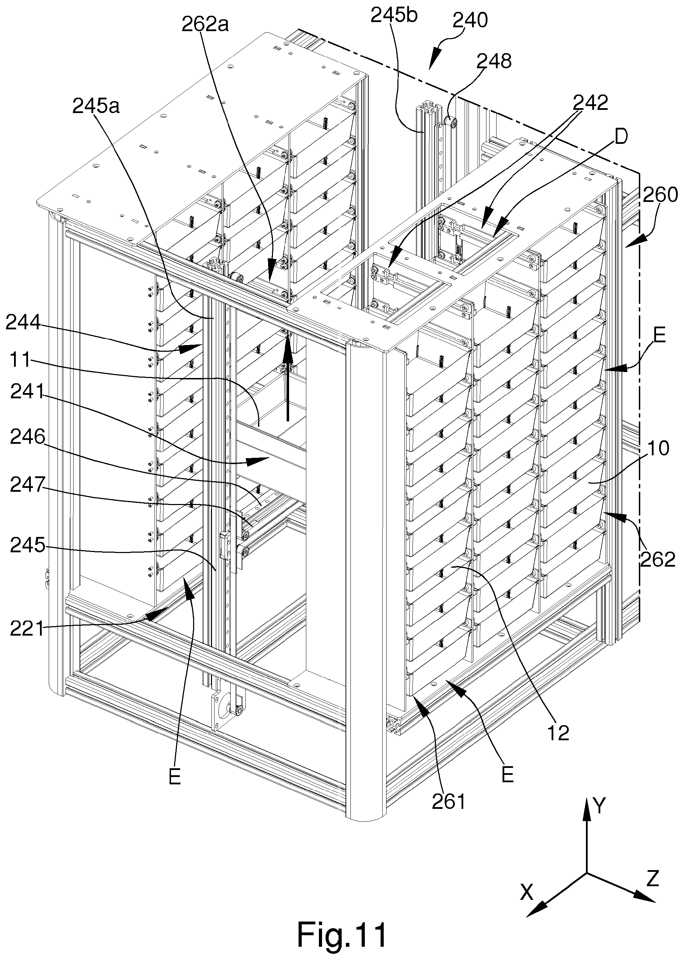

As observable from Figures 9-14, the ward trolley 200 defines at least one entry area C of at least one medicine into the ward trolley 200 and at least one exit area D of the medicine from the ward trolley 200.

Advantageously, the ward trolley 200 is provided with a movement assembly 240 arranged at least partly inside the housing compartment 221 and configured to move the medicine between at least one entry area C and one exit area B.

The movement assembly 240 is provided with at least one shelf 241 adapted to receive and support the tray 10, preferably by means of a supporting surface 253. The use of a movement assembly 240 configured to move a certain type of tray 10 allows controlling the dispensing of drugs indirectly, thus avoiding the handling of containers and/or blister packs that usually have different shapes and sizes from drug to drug.

Further embodiments cannot however be ruled out wherein the shelf 241 is configured to directly move the medicines.

Additionally, the ward trolley 200 also has at least one storage area E for the storage of the tray 10 before being picked up by the movement assembly 240 to move it towards the exit area D. As described in detail in the remainder of this description, the storage area E is arranged at the point where a suitable support 261 is located which is adapted to receive a tray 10.

Preferably, the ward trolley 200 comprises a plurality of storage areas E to store a large number of trays 10 inside the ward trolley 200, so as to allow healthcare providers to treat a large number of patients during the same ward route.

The movement of the trays 10 inside the ward ward trolley 200 occurs as follows: each tray 10 coming from the ward cabinet 100 is initially positioned at the entry area C and is inserted into the ward ward trolley 200 through an entry opening 249. The movement assembly 240 is intended to pick up and move the tray 10 from the entry area C towards the storage area E to store it in the housing compartment 221.

When an operator needs to pick up the drug contained in the tray 10, the movement assembly 240 is activated, e.g. by the processing means 238, to pick up the tray 10 from the storage area E and move it towards the exit area D, thus allowing the operators to pick up the medicines and dispense them to patients. Additionally, the movement assembly 240 is also configured to move the shelf 241 towards an unloading area F in which the shelf 241 is configured to interface with the cabinet 100 in order to deliver the tray 10 thereto. Such an operation is typically necessary in order to remove the empty trays 10 from the ward trolley 200 or to store in the ward trolley 200 only those trays 10 which are to be transported to the hospital ward. Preferably, the unloading area F coincides with the entry area C.

Advantageously, the exit area D is positioned close to and/or substantially mating the worktop 226, thus allowing the operators to pick up the drugs stored inside the housing compartment 221 from a lifted, convenient and ergonomic position at all times, regardless of the amount of drugs already administered and of the remainder of the latter in the ward trolley 200. Preferably, the exit area B is arranged at a height above the ground comprised between 50 cm and 200 cm, preferably 100 cm.

In the embodiment shown in the figures, the exit area B is arranged at the point where the worktop 226 is located and preferably close to one of the side walls 224a, 224b, preferably the first side wall 224a.

Appropriately, the ward trolley 200 comprises at least one exit opening 242 arranged at the point where the exit area D and adapted to allow the medicine to exit the housing compartment 221. In this case, the exit opening 242 is formed on the worktop 226.

It cannot however be ruled out that the exit area D, and therefore the exit opening 242, may be arranged at the point where a different wall is located, such as e.g. the first side wall 224a in order to increase the flexibility of the ward trolley 200.

In particular, the exit opening 242 is made pass-through to allow the exchange of the tray 10, or a medicine, between the shelf/tray and/or the movement assembly 240 and the user.

Preferably, the exit opening 242 is pass-through for the passage of one tray 10 at a time.

Preferably, the exit opening 242 is pass-through for the passage of multiple trays 10 at a time.

In one embodiment, described in more detail below, the ward trolley 200 comprises a plurality of openings 242 (preferably two openings 242) at the point where the exit area B is located. This solution allows for increased speed of dispensing the drugs from the ward trolley 200 since, during the pickup by an operator of a drug from a first opening 242, the movement assembly 240 may move the tray towards the other opening, making the drug available for a subsequent pickup by the operator.

Preferably, as shown in Figure 8, the two openings 242 are arranged side by side to each other along the worktop 226.

To prevent the wrong drug from being accidentally picked up by the operators, the ward trolley 200 is provided with one or more closing elements 243 mounted at the point where each exit opening 242 is located for the selective closure of the latter. In particular, each closing element 243 is movable between an opening configuration, adapted to ensure access to the exit opening 242 and a closure configuration adapted to deny access to the exit opening 242. Preferably, when a closing element 243 is open, the other closing elements 243 are always closed.

Preferably, the closing element 243 may be moved between the open position and the closed position manually and/or by means of suitable actuators.

Preferably, the closing element 243 is of the flap type. However, the possibility of using different closing elements, such as, e.g., of the shutter door or glazed type, etc., cannot be ruled out.

In one embodiment not shown, each exit opening 242 is formed on the worktop 226 in a position close to the first side wall 224a. In detail, the exit opening 242 is formed starting from the joining edge of the worktop 226 with the first side wall 224a and extends at least partly along the worktop 226.

In such an embodiment, preferably, the closing element 243 is of the shutter door type and is mounted in a sliding manner on the worktop 226 and on the side wall 224a of the ward trolley 200 to be movable between the closed position, wherein it covers the exit opening 242 by closing it, and the open position wherein it is partly arranged along the first side wall 224a to clear the exit opening 242. For this purpose, the ward trolley 200 comprises a pair of sliding guides (not shown) formed on the worktop 226 and on the side wall 224a which extend for a first stretch along the worktop 226 starting from the joining edge, by positioning on either side of the exit opening 242, and for a second stretch along the first side wall 224a starting from the joining edge. The closing element 243 is mounted in a sliding manner on the pair of sliding guides to be moved between the open position, wherein it is arranged on the worktop 226 to cover the opening 242, and the closed position wherein it is arranged along the first side wall 224a to clear the exit opening 242.

Conveniently, the processing means 238 are configured to control the opening/closing of the closing elements 243 in order to arrange for the opening of only one closing element 243 at a time, thus preventing the wrong drug from being picked up.

In one embodiment, the ward trolley 200 comprises a single exit opening 242 at the point where the exit area D is located and closable by multiple closing elements 243. In such a case, the exit opening 242 may have a width such that it can also simultaneously control multiple side-by-side trays 10 with the possibility for the operator to pick up the drugs from the tray or from multiple side-by-side trays by selectively opening the flaps 243.

Advantageously, the entry area C is arranged at the point where one of the side walls 224a, 224b is located and at a predefined height above the ground to allow the interface of the ward trolley 200 with one or more cabinets 100 for the storage and movement of the medicines. In particular, the entry area C is arranged at the point where only one of the side walls 224a, 224b of the ward trolley 200 is located, preferably the second side wall 224b. It cannot, however, be ruled out that the entry opening 249 be obtained on another wall of the ward trolley 200, e.g. the opposite wall.

Preferably, the entry area A is arranged at a height above the ground comprised between 50 cm and 150 cm, preferably 80 cm.

Appropriately, the entry opening 249 is positioned at the point where the entry area C is located and is adapted to allow the medicine to exit/enter the housing compartment 221. By means of the entry opening 249, the ward trolley 200 may interface with the cabinet 100 to receive and/or supply the trays from/to the cabinet 100.

In detail, since, as described above, the entry area C coincides with the unloading area F, the entry opening 249 allows the ward trolley 200 both to receive the trays 10 containing the drug from the cabinet 100 and to supply the latter with the empty trays 10 or that are not needed for a specific transfer to the ward.

The entry opening 249 is made pass-through to allow the exchange of the tray or of the medicine between the movement assembly 240 and the ward cabinet 100.

Preferably, the entry opening 249 is pass-through for the passage of one tray 10 at a time.

Preferably, the entry opening 249 is pass-through for the passage of multiple trays 10 at a time.

According to one embodiment, the ward trolley 200 has a single entry opening 249. According to a further embodiment, the ward trolley 200 has no more than one entry opening 249.

Advantageously, thanks to the specific configuration of the ward trolley 200, the movement assembly 240 always moves the trays 10 towards a single entry area A, thus allowing the interface of the ward trolley 200 with one or more cabinets 100 for the storage and movement of medicines.

As explained above, the cabinet 100 is provided with a movement assembly 102 configured to transfer the trays 10 configured to transfer trays 10 to the ward trolley 200 and, as will be seen below, also to receive trays 10 from the interchange trolley 400.

The movement assembly 102 operates by shifting towards the ward trolley 200 by extending beyond the front wall 105 of the cabinet 100 to at least partly pass through both the opening 114 of the cabinet 100 and the entry opening 249 of the ward trolley 200. Once the tray 10 has at least partly entered the ward trolley 200, the movement assembly 102 releases the tray 10 onto an appropriate support 261 to be picked up by appropriate interfacing means 250 of the ward trolley 200 which take over the tray 10 for its subsequent storage inside the ward trolley 200.

In one embodiment, a conveyor belt may be provided which is arranged at the opening 114 of the cabinet 100 and is adapted to be at least partly inserted into the ward trolley 200 through the entry opening 249. The movement assembly 102 of the cabinet 100 may thus arrange the trays 10 on the conveyor belt which, in turn, moves them inside the ward trolley 200 to position them on the support 261.

Conveniently, the entry opening 249 of the ward trolley 200 and the opening 114 of the cabinet 100 are arranged at the same height above the ground to allow the transfer of the trays 10 from the cabinet 100 to the ward trolley 200, and/or vice versa.

As can be observed, the entry opening 249 of the ward trolley 200 may have a width such that it can also simultaneously control multiple trays 10 side by side. It follows that the dimension of the opening 114 of the cabinet 100 may also be sized in a complementary manner and substantially similarly to the dimension of the entry opening 249 of the ward trolley 200. In such a case, the ward trolley 200 comprises multiple entry areas C and one or more movement assemblies 240 configured to receive the trays 10 from the entry areas C and to move them inside the housing compartment 221.

It cannot however be ruled out that the entry opening 249 may have a height that can also simultaneously control multiple trays 10 stacked one on top of the other.

Advantageously, as anticipated above, the ward trolley 200 is configured to operate on at least one tray 10 associable with the shelf 241 in a removable manner and configured to receive and contain one or more medicines. In actual facts, the medicines are placed inside the tray 10 and the ward trolley 200 is configured to pick up, store and distribute the tray 10.

The use of the tray 10 is particularly advantageous in that it allows the drugs of different sizes and formats to be moved inside the ward trolley 200 indirectly, i.e. without handling the containers and/or blister packs, but by only acting on the tray 10. By means of this expedient, the ward trolley 200 may be configured to move only standard-sized trays, which is easy to do and inexpensive.

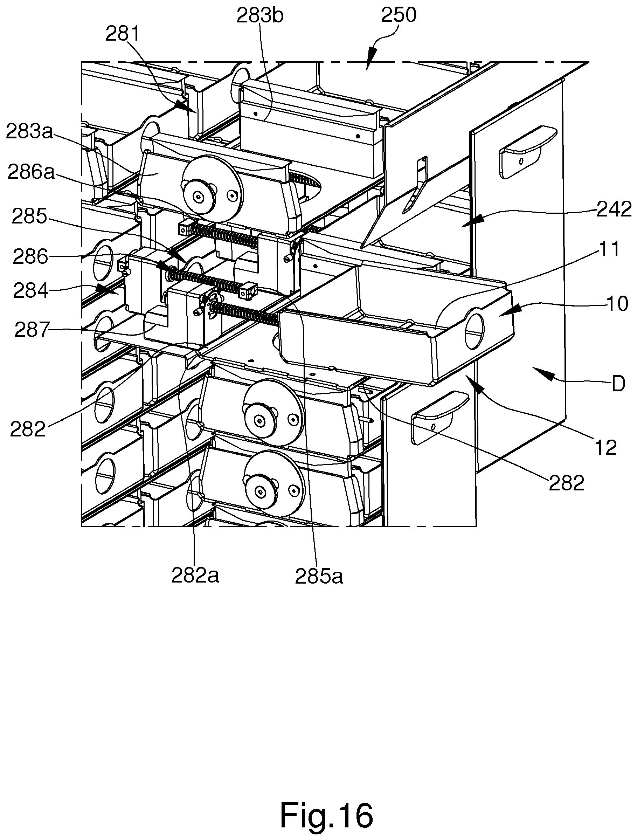

As shown in Figure 16, the tray 10 comprises a base 11, which serves as a support for one or more medicines, bounded peripherally by walls that rise from the base for a predetermined height. Preferably, the walls are four, facing two by two.

Preferably, the trays 10 have a length comprised between 5 cm and 90 cm, preferably 19 cm, a width comprised between 5 cm and 90 cm, preferably 14 cm, and a height comprised between 0.5 cm and 20 cm, preferably 5 cm.

In one embodiment, the trays 10 may have two predefined widths. **In** detail, a first group of trays 10 has a width comprised between 5 cm and 18 cm, preferably 12 cm to accommodate standard-sized packages of drugs, while a second group of trays 10, according to the above, has a width comprised between 10 cm and 30 cm, preferably 19 cm to accommodate larger packages of drugs. Different or additional embodiments with groups of trays of different sizes cannot however be ruled out in order to expand the housing possibilities for even more types of packages.

These dimensions allow the trays 10 to receive most formats of drugs available on the market, thus allowing the ward trolley 200 to control the storage and dispensing of a high quantity and variety of drugs quickly and easily.

Preferably, the base 11 of the tray 10 comprises a lower surface 12 intended to be arranged in contact with the shelf 241. Preferably, for this purpose, the lower surface 12 of the tray 10 has a shape substantially complementary to the shelf 241.

Conveniently, the trays 10 are shaped in such a way that several trays 10 can be stacked one on top of the other.

Advantageously, each tray 10 comprises an identifier element which, as will be described in detail later in this description, allows for the creation of a univocal association between the tray 10 and one or more medicines to be administered to one or more patients. For example, the identifier element may be a tag, an RFID code, a QR code, or the like.

According to one embodiment, conveniently, the ward trolley 200 comprises a plurality of movement assemblies 240, preferably aligned with each other along the axis X.

Preferably, each movement assembly 240 may be configured to handle a specific type of tray 10.

It cannot however be ruled out that a movement assembly 240 may be configured to handle a plurality of types of trays 10.

Conveniently, the ward trolley 200 is configured to arrange for the dispensing from the exit opening 242 of the drugs moved by only one movement assembly 240 at a time, to prevent the wrong drug from being accidentally picked up by the operators.

Conveniently, the ward trolley 200 comprises a closing element for each movement assembly 240.

In the embodiment shown in Figure 14, wherein there are four movement assemblies 240, the ward trolley 200 has four closing elements, each arranged to close the exit opening 242 at the point where the exit area B of the respective movement assembly 240 is located.

In one or more embodiments, the ward trolley 200 may be provided with a single exit opening 242 through which the drugs moved by the movement assemblies 240 come out. In such an embodiment, a plurality of exit areas can be identified along the exit opening 242, side by side, through each of which a drug moved by a single movement assembly 240 is intended to come out.

Conveniently, each closing element is arranged to close one of the exit areas in order to selectively control the pickup of the drugs.

Appropriately, the movement assembly 240 comprises movement means 244 operatively connected to the shelf 241 to move it at least between the entry area AC the storage area E and the exit area D.

Advantageously, the ward trolley 200 comprises interfacing means 250 configured to operate in a receiving configuration, wherein they are adapted to receive the tray 10 to arrange it on the shelf 241, and a release configuration wherein they are adapted to release the tray 10 from the shelf 241 to arrange it, e.g., at the point where the exit area D is located.

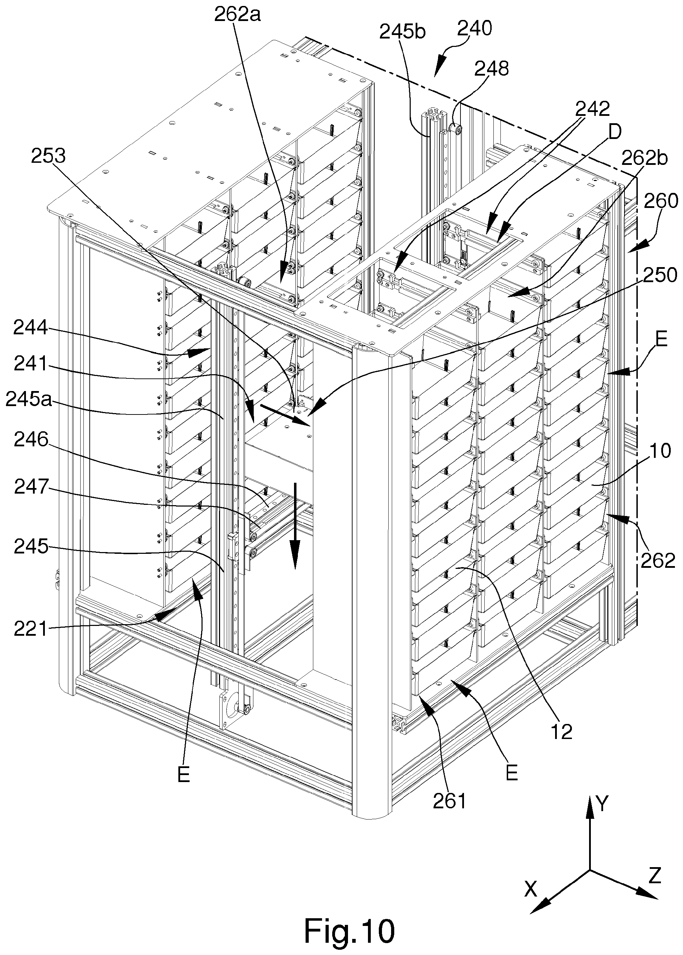

Preferably, the interfacing means 250 are configured to constrain the tray 10 to the shelf 241 at least during its movement inside the housing compartment 221. According to the embodiment shown in Figures 10-13, advantageously, the movement assembly 244 240 is configured to move the drugs inside the ward trolley 200 between the various areas C, D, E and F along mainly straight directions.

In particular, the movement means 244 are of the type of a Cartesian robot and are configured to make the shelf 241 shift along at least one first vertical axis Y and along at least one second axis X transverse to the first axis Y. The movement means 244 are arranged in the housing compartment 221 in a position between the first side wall 224a and the second side wall 224b so as to be able to pick up the trays 10 from the input area A, placed at the point where the second side wall 224b is located, and move them towards the exit area D, placed at the point where the worktop 226 is located and close to the first side wall 224a.

Preferably, the first and second axes X, Y are arranged substantially vertically and horizontally respectively, thereby allowing the shelf 241 to be moved in a substantially vertical plane X, Y.

Even more preferably, the axes X, Y are arranged substantially parallel to the side walls 224a, 224b of the ward trolley 200.

This configuration allows for the efficient movement of the tray 10 inside the ward trolley 200 between the entry area C, the storage area E and the exit area D.

Appropriately, the movement means 244 comprise at least one first and one second straight guides 245, 246 arranged substantially parallel to the first and to the second axes X, Y, respectively. Preferably, the first and the second straight guides 245, 246 are sliding with respect to each other and the shelf 241 is mounted in a sliding manner on at least one of either the first or the second straight guides 245, 246.

Preferably, the shelf 241 is mounted in a sliding manner on the second straight guide 246, i.e. on the horizontal guide, and the latter is mounted in a sliding manner on the first straight guide 245, i.e. on the vertical guide.

It cannot, however, be ruled out that the shelf 241 may be mounted on the vertical guide 245 and the latter be mounted on the horizontal guide 246 or that the shelf 241 may be mounted on both straight guides 245, 246 in a sliding manner.

Preferably, the movement means 244 may comprise a third straight guide, not shown in the figures, arranged parallel to an axis Z transverse to the axes X and Y and on which one of either the first or the second straight guides 245, 246 is mounted in a sliding manner.

Conveniently, the movement means 244 comprise a pair of vertical guides 245a, 245b, the first 245a and second vertical straight guides 245b, respectively, between which the horizontal guide 246 extends and they are adapted to support the latter in a sliding manner.

Conveniently, the movement means 244 comprise at least one actuator, such as e.g. a motor, operatively connected to the shelf 241 by means of at least one belt drive element 247 to move it along at least the horizontal guide 246. Furthermore, the movement means 244 comprise a second actuator operatively connected to the horizontal guide 246 by means of a second belt drive element 248 to move it along the vertical guide 245.

In detail, the second belt drive element 248 extends along one of the vertical straight guides 245a, 245b, preferably the second vertical straight guide 245b, and is closed on itself to wrap around at least one pair of movement pulleys arranged, preferably, substantially at the point where the ends of the vertical straight guide 245b are located. The actuator is operatively connected to at least one of the movement pulleys to move the second belt drive element 248 in rotation.

On the other hand, the first belt drive element 247 extends at least partly along the first vertical straight guide 245a and at least partly along the horizontal straight guide 246. In detail, the first belt drive element 247 is closed on itself to wrap around at least one pair of movement pulleys arranged substantially at the points where the ends of the first vertical straight guide 245a are located and at least one pulley mounted on the horizontal straight guide 246 in the proximity of the second vertical straight guide 245b. In addition, a pair of pulleys are provided which are adapted to arrange at least one stretch of the belt drive element 246 247 substantially parallel to the horizontal straight guide 246. For this purpose, these pulleys are mounted on the horizontal straight guide 246 in the proximity of the first vertical straight guide 245a and are arranged vertically aligned with each other so that the belt drive element 246 247 can slide between them, thus extending by at least one stretch parallel to the horizontal straight guide 246.

In summary, by rotating the first and the second drive elements 247 around the corresponding pulleys, it is possible to move the shelf 241 along a horizontal direction and the horizontal straight guide 246 along a vertical direction, respectively.

It is useful to note that a vertical displacement of the horizontal straight guide 246 generates a rotation of the first drive element 247 which in turn causes a displacement of the shelf 241 along the horizontal direction. This displacement is taken into account by the processing means 238 to calculate the actual rotation to be imparted to the belt drive elements 247, 248 to move the shelf 241 to the desired position.

Preferably, the actuators are positioned at the bottom of the ward trolley 200.

Further embodiments of the movement assembly 240 cannot however be ruled out wherein, e.g., the movement means 244 are made by means of different solutions to move the shelf 241 inside the housing compartment 221 with three, four or more degrees of freedom.

For example, in one embodiment, the movement means 244 may comprise one or more robotic arms having an operation of the SCARA type ("Selective Compliance Assembly Robot Arm") configured to move the tray 10 along directions parallel to the axes X, Y, and Z. In detail, the movement means 244 may comprise at least one kinematic chain associated with the shelf 241. Preferably, the kinematic chain comprises a plurality of arms connected to each other by means of kinematic pairs which allow the shelf 241 to be moved inside the housing compartment 221 along directions parallel to the axes X, Y, and Z and supported, if necessary, by rotational means.

In one embodiment, the kinematic chain comprises one arm connected to the ward trolley 200 by means of a lower pair having a substantially horizontal axis of rotation. The shelf 241 is mounted on the arm in a sliding manner in order to be moved along the longitudinal direction of extension of the latter.

In addition, the arm extends inside the housing compartment 221 by a predefined length such as to allow the shelf 241 to reach the various storage areas.

In order to pick up a given tray 10 arranged in a given position of the storage area E, the arm is rotated around the axis of rotation so as to arrange a portion thereof in a position close to the storage area E. Subsequently, the shelf 241 runs along the arm to reach such portion, thereby arranging itself close to the tray 10 to be picked up.

In one embodiment, the kinematic chain comprises a first arm connected, at a first end, to the ward trolley 200 by means of a lower pair having a substantially horizontal axis of rotation. Preferably, the first end is constrained to the ward trolley 200 at the center of the housing compartment 221 so that the first arm may rotate completely around the axis of rotation. The second end of the first arm is connected to a second arm by means of a second lower pair. The second arm is in turn connected to the shelf 241 to move it inside the housing compartment 221.

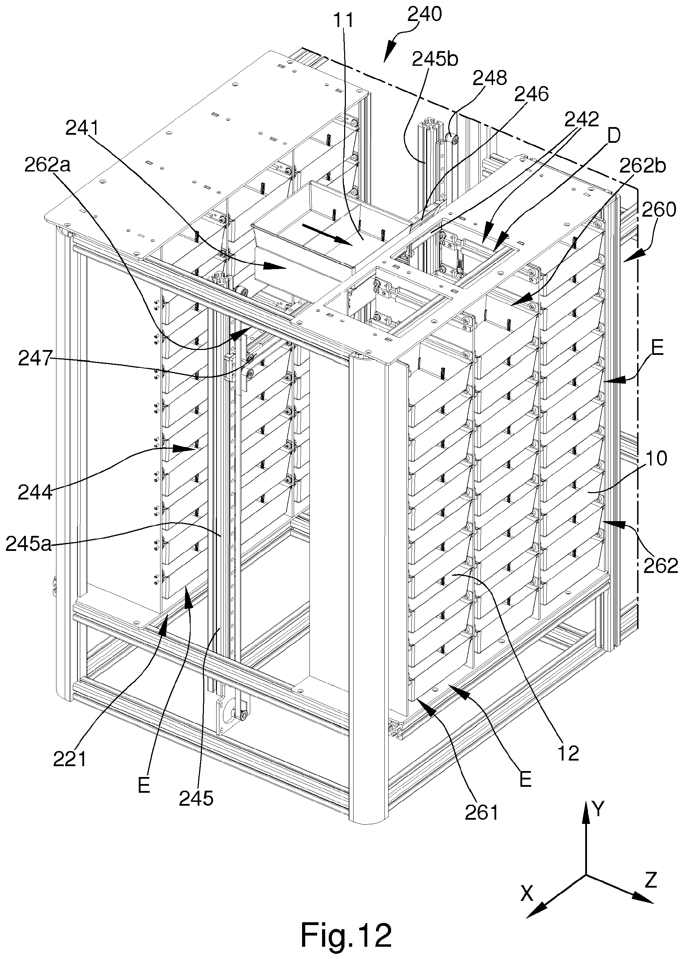

As can be observed from Figure 12, the ward trolley 200 comprises at least one storage structure 260 arranged internally to the housing compartment 221 and provided with a plurality of supports 261, each support 261 being associable with at least one tray 10 and arranged at the point where the storage area E is located. In this case, each support 261 is associable with a single tray 10. Other embodiments cannot however be ruled out wherein each support 261 is associable with multiple trays 10 at the same time.

In this case, the supports 261 are arranged stacked one on top of the other and side by side along directions substantially parallel to the axes X, Y.

According to one embodiment, the supports 261 may comprise storage cells 262 configured to house one or more trays 10 inside them or shelves arranged one on top of the other wherein the trays 11 are laid side by side.

Conveniently, the ward trolley 200 comprises a first and a second storage structure 260 arranged facing and spaced apart from each other to make a gap inside which the movement assembly 240 is arranged to dispense and pick up the trays 10.

Preferably, the first storage structure 260 is arranged side by side with respect to the first side wall 224a and the second storage structure 260 is arranged side by side with respect to the second side wall 224b.

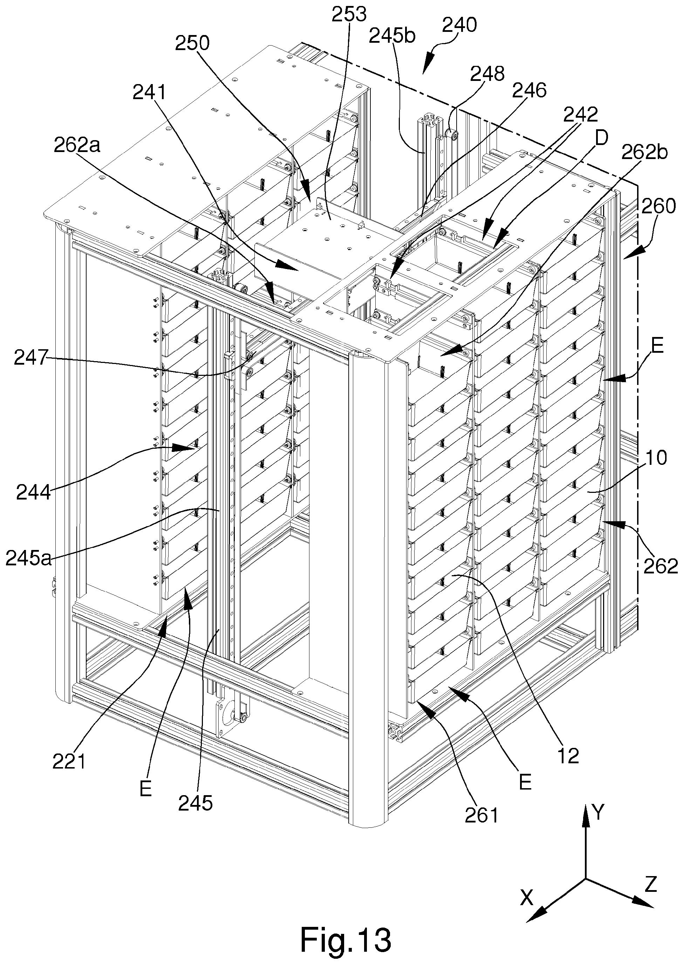

As observable from Figure 13, the storage structure 260 is provided with at least one free cell 262a arranged facing the exit opening 242. Such a free cell 262a is made pass-through to allow the interfacing means 250 to reach the entry opening 249 and receive the tray 10.

Conveniently, one of either the first or the second storage structures 260, preferably the second storage structure 260, has one or more pickup cells 262b adapted to receive a tray 10 intended to be picked up by the operator. The pickup cells 262b are arranged at the point where the exit area D is located and facing at least one exit opening 242.

For this purpose, the exit opening 242 is obtained pass-through towards a pickup cell 262b so that the operator can pick up the tray or the drug placed in such a pickup cell 262b.

According to the embodiment shown in Figure 13, the storage structure 260 comprises a pair of pickup cells 262b arranged side by side and close to the worktop 226.

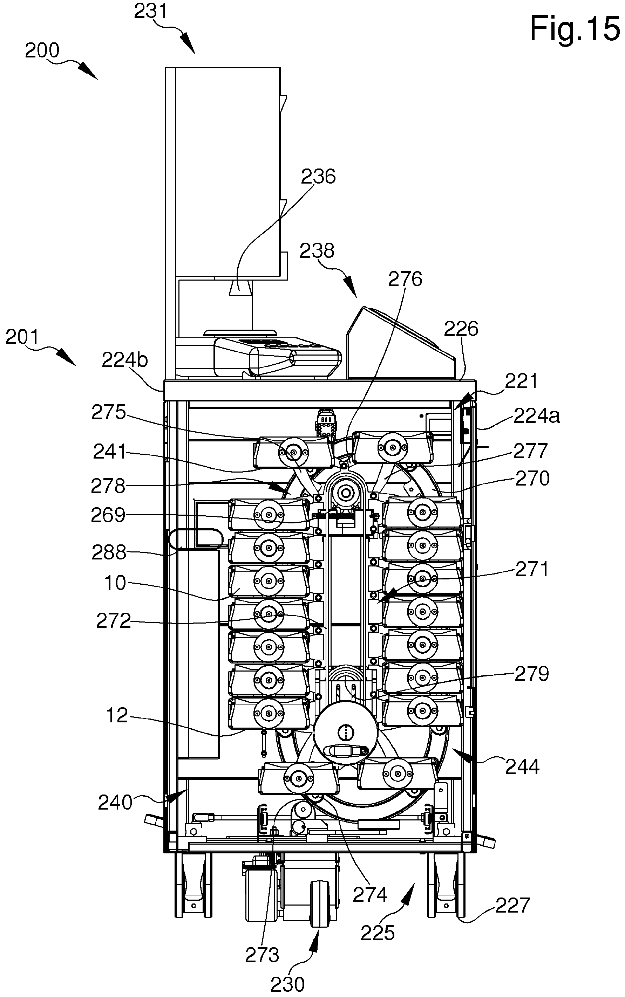

According to the embodiment shown in Figures 14 and 15, the movement means 244 comprise a guide 270, on which one or more shelves 241 are engaged in a sliding manner, configured to guide the motion of the shelf 241 inside the housing compartment 221 along a circular movement trajectory. To this end, the movement means 244 are provided with a drive system 271 which imparts motion to each shelf 241 along the guide 270. As will be described in detail later in the present description, the drive system 271 is implemented so that each shelf 241 is connected to a belt drive member 272. The possibility cannot however be ruled out that the guide 270 and the drive system 271 be a single movement element/device.

Preferably, the guide 270 is a track on which the shelves 241 are constrained in a sliding manner by means of a special rotational-mechanical coupling. In detail, each shelf 241 is connected to the track 270 by means of a skid 273 provided with its own bearing 274 thanks to which it is possible to make the shelves 241 slide along the trajectory defined by the track 270. Additionally, each skid 273 is pivoted simultaneously to the shelf 241 and to a fork 275. The fork 275 in turn serves as a connection between the respective shelf 241 and the drive member 272. The fork 275 is provided with two mutually movable arms 276, 277 which bifurcate from a vertex. In particular, the fork 275 rotates around its own axis of rotation passing through the vertex where the skid 273 and the shelf 241 are pivoted.

Conveniently, the shelf 241 is connected to the fork 275 at its own vertex by means of a lower pair, preferably idle, which allows it to rotate around the axis of rotation transverse to the plane of movement of the shelf 241. In addition, the arms 276, 277 are pivoted in turn to the drive member 272 in order to rotate around respective axes of rotation substantially parallel to the axis of rotation passing through the vertex. Such a configuration allows the fork 275 to adapt to the variation in curvature of the drive member 272 and, at the same time, maintain the shelf 241 in a substantially horizontal position at all times.

It should be specified that the fork 275 is a particular connection means 278 of the shelf 241 to the drive system 271; this does not detract from the possibility of having different connection means 260 the operation of which is similar to that of the fork 275 described above.

As shown in Figure 15, the track 270 has a circular shape closed on itself to move the shelf 241 on a rotational plane. Such a conformation allows for the movement of each shelf 241 towards the exit area D or the entry area C, while maintaining the other shelves 241 stored inside the housing compartment 221, regardless of the quantity of drugs already administered and of the remainder of those drugs in the ward trolley 200.

Conveniently, the track 270 runs mainly vertically to move the shelves 241 on a substantially vertical plane of movement. Furthermore, the track 270 is arranged transverse to the direction of forward movement of the ward trolley 200. In other words, the track 270 extends in height between the base 225 and the worktop 226, and in width between the first side wall 224a and the second side wall 224b. This expedient allows the pickup/loading of the medicine from an always elevated position while using as much space as possible to store the medicines in the housing compartment 221.

In detail, the shape of the guide 270 is circular or oval and allows the shelves 241 to be moved between different positions by guiding them along a predefined trajectory and along a single direction of rotation, thus reducing the costs of implementation and maintenance of the movement means 244.

Preferably, the shelves 241 are moved from the entry area C to the exit area D in a counterclockwise direction and/or vice versa.

Preferably, the ward trolley 200 is provided with four movement assemblies 240 side by side with the planes of rotation parallel to each other. It cannot, however, be ruled out that the ward trolley 200 may be designed to contain more or fewer movement assemblies 240 depending on operational requirements.

As shown in Figure 15, the motion drive system 271 comprises at least one driving pulley 279, set in rotation by direct coupling to an actuator, and at least one idler pulley 269.

As anticipated above, the drive system 271 comprises a drive member 272, closed on itself in a loop to wrap around the pulleys 279, 269, and to which the shelf 241 is connected. The drive member 272 may be, e.g., a belt, a chain, a cable, or any flexible tie rod.

In particular, the pulleys 279, 269 are arranged one on top of the other and aligned in a plane substantially parallel to the plane of movement of the shelf 241. In addition, the axes of rotation of the pulleys 279, 269 are arranged transversely to the plane of movement of the shelf 241.

In detail, the plane of movement is substantially vertical and the axes of rotation are arranged substantially horizontally.

Preferably, the driving pulley 279 is arranged inferiorly to the idler pulley 269. Preferably, the drive system 271 is arranged at least partly inside the perimeter described by the track 270. In other words, the drive system 271 is at least partly circumscribed by the track 270.

According to one embodiment (Figures 10-13), the interfacing means 250 are configured to move the supporting surface 253 of the shelf 241 along a direction parallel to the axis Z between an interfacing position, wherein the supporting surface 253 protrudes from the shelf 241 to receive in support or to deliver the tray 10, and a constraining position wherein the supporting surface 253 is retracted into the shelf 241 to constrain it to the latter.

To this end, preferably, the supporting surface 253 is mounted on the shelf 241 in a sliding manner and the interfacing means 250 comprise an actuator, not shown in the figures, operatively connected to the supporting surface 253 to move it between the constraining position and the interfacing position, and/or vice versa.

Conveniently, the supporting surface 253 is movable along the axis Z towards both the first side wall 224a and the second side wall 224b.

Advantageously, the interfacing means 250 comprise forward movement means arranged on the supporting surface 253 to move the trays 10 with respect to the supporting surface 253 along the axis Z, thereby making a univocal association between the tray 10 and the supporting surface 253 allowing the latter to be received and/or delivered by/from the shelf.

As anticipated above, the interfacing means 250 operate in a receiving configuration when the shelf 241 is positioned at the point where a tray 10 to be picked up is located, e.g. in the proximity of the entry area C or of the storage area E, and in a releasing configuration when the shelf 241 is positioned at the point where the exit area D or the storage area E are located.

In a receiving configuration, the interfacing means 250 move the supporting surface 253 to the interfacing position, arranging it at least partly below the tray 10. At this point, the forward movement means are activated, which move the tray 10 to fully place it on the supporting surface 253. Finally, the supporting surface 253 is moved to the constraining position to constrain the tray 10 to the shelf 241, thereby allowing it to be moved inside the housing compartment 221. In the releasing configuration, the interfacing means 250 move the supporting surface 253 on which a tray 10 is placed towards the area wherein the tray 10 is to be released. At this point, the forward movement means are activated to release the tray 10, by placing it in the releasing area.

According to one embodiment not shown in the figures, the interfacing means 250 comprise a pair of gripping elements of the type of movable grippers towards and away from each other to grasp, preferably, a single tray 10. Other embodiments cannot however be ruled out wherein the interfacing means 250 are configured to move multiple trays 10 at the same time.

Conveniently, the interfacing means 250 may comprise a blocking assembly mounted on the shelf 241 to constrain, preferably in a removable manner, the tray 10 to the shelf 241.

As shown in Figures 14-15, the interfacing means 250 comprise an anchoring system 281 configured to anchor the tray 10 to the shelf 241 in a removable manner in order to store it in the ward trolley 200. In actual facts, the anchoring system 281 is configured to constrain the tray 10 to the shelf 241 during at least the movement inside the ward trolley 200 and release the tray 10 when it is in the exit area D to allow it to come out of the exit opening 242.

Conveniently, the anchoring system 281 comprises at least one abutment element 282 arranged on the shelf 241 and configured to abut against the tray 10 in order to prevent accidental reciprocal movement of the tray 10 on the shelf 241 when moved.

In detail, in use, the abutment element 282 is arranged frontally to the tray 10 when the latter is leaning against the shelf 241. In particular, the abutment element 282 is arranged transversely to the plane of movement of the shelf 241. Conveniently, the abutment element 282 protrudes cantilevered from the shelf 241 by a predefined height less than the height of the tray 10 so as to allow the insertion and removal of the latter into/from the shelf 241.

In one or more embodiments, the abutment element 282 comprises at least one edge 82a of the shelf 241 raised with respect thereto.

Conveniently, the anchoring system 281 comprises a pair of abutment elements 282 arranged, in use, frontally and backwardly with respect to the tray 10. In particular, the abutment elements 282 are arranged transversely to the plane of movement of the shelf 241 to block the displacement of the tray 10 along a direction parallel to the plane of movement.

Additionally, the anchoring system 281 comprises a pair of side boards 283a, 283b arranged, in use, on either side of the tray 10. More specifically, the side boards 283a, 283b are arranged parallel to the plane of movement of the shelf 241 to block the displacement of the tray 10 along a direction which is transverse to the plane of movement.

Substantially, the side boards 283a, 283b and the abutment elements 282 operate in conjunction with each other to anchor the tray 10 to the shelf 241, limiting any displacement caused by the movement of the shelf 241 inside the ward trolley 200.

Additionally, the side boards 283a, 283b may serve as a guide for the entry and exit of the tray 10 into/from the shelf 241.

As shown in Figures 16, 17 and 18, the interfacing means 250 comprise a thrust assembly 284 configured to push the tray 10 along a thrust direction directed towards the exit opening 242 when the shelf 241 is in the exit area D in order to release the tray 10, allowing it to be picked up by an operator and/or a cabinet. Preferably, the thrust direction is substantially parallel to the plane of movement.

In detail, the thrust assembly 284 comprises a stop element 285, which is adapted to abut against the tray 10, and elastic means 286 configured to move the stop element 285 between a home position, wherein it is moved away from the tray 10, and a thrust position wherein it is brought closer to the tray 10 to abut against it.

Suitably, the thrust assembly 284 comprises a holding body 287 of the abutment element 282 mounted on the ward trolley 200 at the point where the exit opening 242 is located so that the shelf 241, when in the exit area D, is placed between the stop element 285 and the exit opening 242. The stop element 285 is mounted on the holding body 287 in a sliding manner by means of a cylindrical pair which allows it to be moved along the thrust direction.

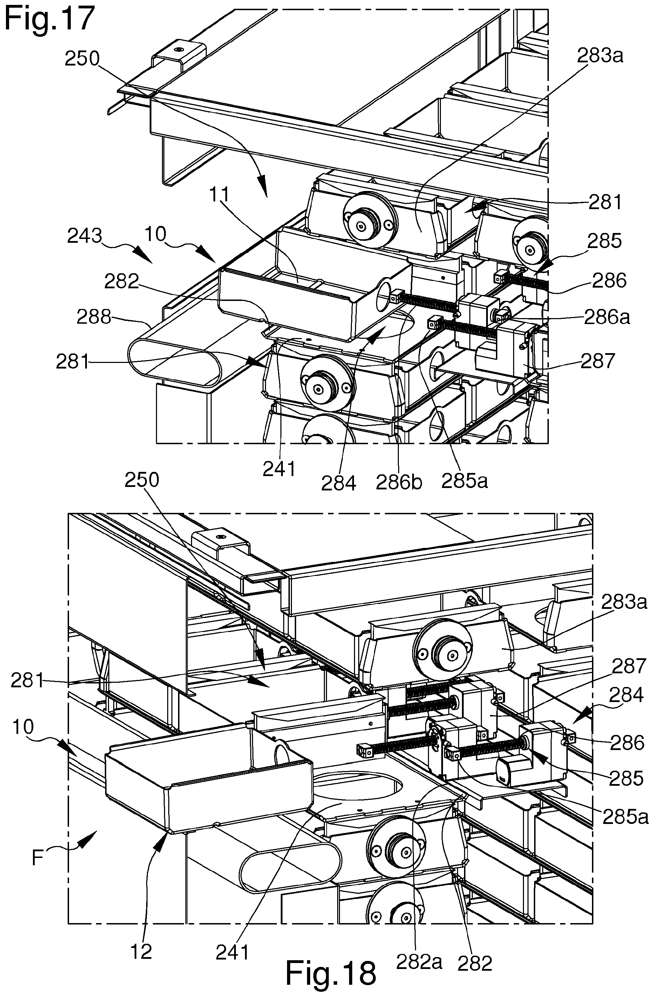

As shown in Figure 17, the stop element 285 comprises a head portion 285a, adapted to abut against the tray 10, and an elongated body 285b mounted on the holding body 287 in a sliding manner. The elastic means 286 are provided with a spring 286a mechanically coupled to the stop element 285. Specifically, the spring 286a is loaded when the stop element 285 is in the home position and unloaded when the stop element 285 is in the thrust position.

Preferably, the spring 286a is positioned between at least the head portion 285a of the stop element 285 and the holding body 287.

Preferably, the spring 286a wraps around the elongated body 285b of the stop element 285.

Conveniently, the interfacing means 250 comprise an actuation mechanism configured to actuate the thrust assembly 284 when the shelf 241 is in the exit area D. Specifically, the actuation mechanism is configured to keep the spring 286a preloaded when the stop element 285 is in the home position and to release the spring 286a so that it can operate on the stop element 285 to move it to the thrust position.

In one or more embodiments, the interfacing means 250 may comprise a second thrust assembly 284 configured to push the tray 10 along a thrust direction directed towards the entry opening 249 when the shelf 241 is in the unloading area F in order to release the tray 10, allowing it to be picked up by a cabinet. The second thrust assembly 284 is entirely similar to the thrust assembly 284 described above and to the detailed description of which reference is made in full.

In one embodiment, the interfacing means 250 may comprise a conveyor belt 88, and/or a supporting surface, positioned at the point where the exit opening 242 and/or at the entry opening 249 is located and configured to move the tray 10 along the thrust direction in order to facilitate the exit thereof from the housing compartment 221, subsequent to the thrust given by the stop element 285.

Advantageously, the processing means 238 of the ward trolley 200 are configured to control the operation of the ward trolley 200 in an at least partly automated manner.

In particular, the processing means 238 are in signal connection with the movement assembly 240 and the interfacing means 250.

The processing means 238 may be connected to the hospital's central healthcare ICT architecture, such as e.g. via a software architecture owned by the Applicant which communicates with the central ICT architecture. In this way, information about medicines, their location and administration is always available and monitored by the processing means and/or by the central unit.

Advantageously, the ward trolley 200 of the present invention may operate under at least one of the following conditions also combinable with each other:
- loading condition, wherein the ward trolley 200 receives one or more trays 10 from the ward cabinet 100 to store them in the housing compartment 221;
- dispensing condition, wherein the ward trolley 200 selects and dispenses one or more trays 10, and thus the medicines, from the stored trays towards an operator;
- unloading condition, wherein the ward trolley 200 interacts with the ward cabinet 100 to provide it with one or more trays 10.

In one or more embodiments, the ward trolley 200 may operate in multiple conditions simultaneously. For example, the loading condition and the unloading condition may occur simultaneously during a single interaction with the cabinet 100.

The loading condition mainly occurs when the ward trolley 200 is moved by an operator towards the cabinet 100, arranging the entry opening 249 close to the cabinet interaction door for the replenishment of medicines.

In the storage condition, the ward trolley 200 is configured to interface with the cabinet 100 to receive and store one or more medicines, preferably by means of the use of the trays 10 as described above.

At this point, the processing means 238 are configured to activate the movement assembly 240 to arrange the shelf 241 in the proximity of the input area C in order to receive the tray 10.

In particular, the cabinet, by means of suitable interfacing means, inserts the tray 10 into the entry opening 249 to arrange it in the free cell 262a from which it is subsequently picked up by the interfacing means 250 of the shelf 241.

In such a condition, the processing means 238 are configured to receive an identification signal identifying each tray 10 arranged on the shelf 241.

The term "identification signal" means a digital signal interpretable by the processing means 238 and containing information regarding the identifying element of the tray 10 and the medicines contained in such a tray 10. Such an identification signal allows for a univocal correspondence between a tray 10 and the medicine contained therein to make them easily traceable once they have been stored in the ward trolley 200 and/or transferred to the cabinet.

In one embodiment, the processing means 238 are configured to receive at input both the signal representative of the identification element of the tray 10 and the signal representative of one or more medicines in order to associate the signals with each other to generate a univocal identification signal which uniquely represents the tray 10 and the medicine contained therein.

The aforementioned signals may be continuously monitored by the processing means and/or by the hospital's central healthcare ICT architecture to smartly control all tracing operations of the medicines and of the trays 10 both inside the hospital environment and inside the ward trolley 200, the ward cabinet 100, the central cabinet 300 and/or the interchange trolley 400.

Preferably, the processing means 238 are usable by an operator by means of a suitable interface connected thereto (e.g., the display 237, a smart-phone, a tablet, etc.) to generate one or more signals to be sent to the processing means 238. In particular, the operator may enter the data of the drug independently into the ward trolley 200 by means of the display 237 or directly with their smart-phone, tablet, and/or a PC.

In this way, the ward trolley 200 can operate as a drug dispenser (i.e., in so-called "dispensing" mode) to allow an operator to select, as needed, the drug to be picked up and dispensed. For example, the display 237 can illustrate the drugs contained in the ward trolley 200 and, by means of an electronic keypad or a touch screen, may allow the operators to select which of the illustrated drugs they want to take.

Upon receiving the univocal identification signal, the processing means activate the movement assembly 240 to move the tray 10 from the entry area C to the storage area E by arranging it inside an empty storage cell 262.

Preferably, the processing means 238, by means of specific software, control the movement assembly 240 to store the trays 10 in specific storage cells 262 also depending on the size of the drug housed therein. In this case, the processing means 238 are configured to arrange the low drugs in upper storage cells 262 and the high drugs in lower storage cells 262. This expedient allows the storage of the trays 10 to be optimized to have the tray/drug as close as possible to the worktop.

At this point, the processing means 238 store the storage cell 262 wherein the tray 10 has been positioned. Preferably, such storage is accomplished by associating the univocal identification signal of the tray 10 with an identification parameter of the cell 262 itself, such as e.g. a coordinate reference, an identification number and/or the like.

In one or more embodiments, the ward trolley 200 may comprise proximity sensors configured to detect when the ward trolley 200 is in the proximity of the cabinet in order to activate the processing means 238.

The selection condition may mainly occur when the operator needs to take a drug from the ward trolley 200 to provide it to a patient.

In the selection condition, the ward trolley 200 is configured to select the storage cell 262 associated with the tray 10 containing the medicine to be provided to the patient, to pick up the tray 10 arranged in such a storage cell 262 and, finally, to place the picked up tray 10 at the point where a first pickup cell 262b is located so that an operator can pick up the tray 10.

During pickup of the medicine from the first pickup cell 262b, the movement assembly 240 may be activated to move a second tray 10 containing another medicine to be picked up towards a second pickup cell 262b in order to speed up the pickup operations of the medicines, as described above.

In such a condition, the processing means 238 are configured to receive one or more pieces of information regarding the medicine to be picked up based on which a selection signal is generated and sent to the movement assembly 240.

The term "selection signal" means a digital signal interpretable by the processing means 238 and containing information regarding the medicine and/or the tray 10 to be selected and provided to the operator.

In actual facts, before administering the medicine to the patient, the operator reads the medical record and/or the relevant therapy sheet containing the patient's information and, on the basis of the latter, enters the medicine to be picked up via the display 237.

In one embodiment, the medical record can be of the digital type so that the ward trolley 200 can automatically recognize the patient to be treated and then autonomously provide the medicine to the operator or the list of medicines.

The processing means 238 are then instructed to activate the movement assembly 240 in order to arrange the shelf at the point where the storage cell 262 is located containing the tray 10 to be picked up and, subsequently, to activate the interfacing means 250 to pick up the tray 10 and move it towards the exit area D. Substantially, upon receiving the selection signal, the processing means identify the storage cell 262 on which the tray 10 to be picked up is arranged and activate the movement assembly 240 to pick up the tray 79 itself.

In one embodiment, prior to administering the medicine, it is possible to acquire information about the medicine being administered by prior reading the barcode, RFID and/or the like and also to acquire information about the badge of the operator in charge of administering by means of a reading device suitably provided in the trolley.

The unloading condition can mainly occur when the ward trolley 200 needs to be emptied, for example at the end of a workday or between shifts.

In the unloading condition, the ward trolley 200 is configured to interface with the cabinet 100 to provide it with the trays 10 contained in the housing compartment 221 in order to empty the ward trolley 200.

Specifically, the operator positions the ward trolley 200 at the point where the cabinet 100 is located by positioning the ward trolley 200 so that the entry opening 249 is coupled to the opening 114 of the cabinet 100.

In such a condition, the processing means 238 are configured to activate the movement assembly 240 to arrange the tray 10 in the unloading area F, placing it in the free cell 262a so that the cabinet can pick it up by means of its movement assembly 102. In particular, the movement assembly 102of the cabinet 100 operates by shifting towards the ward trolley 200 by extending beyond the front wall 105 of the cabinet 100 to cross at least partly both the opening 114 of the cabinet 100 and the entry opening 249 of the ward trolley 200. Once the movement assembly 102 has at least partly entered the ward trolley 200, it grasps the tray 10 to store it in the cabinet 100.

This operation is finally repeated for each stored tray 10 of the ward trolley 200 to completely empty it, if necessary.

Preferably, the ward trolley 200 is powered by means of a rechargeable battery pack operatively connected to the various devices/elements of the ward trolley 200. During interfacing, the ward trolley 200 may connect to the cabinet 100 for charging the batteries. For this purpose, one or more connectors (e.g., bayonet, magnetic, etc.) may be provided at the bottom of the body 201 so that when the ward trolley 200 is joined to the cabinet 100, the battery charging operation begins.

According to one embodiment, the system covered by the invention may comprise a central cabinet 300 (or otherwise referred to as a "pharmacy cabinet"), similar to the ward cabinet 100, intended to house both the medicines and the trays 10.

The central cabinet 300 comprises a manipulator 302, preferably of the type of an anthropomorphic robot, and configured to transfer the medicines into the trays 10.

The manipulator 302 is arranged internally to the housing compartment 304 and is also configured to move the trays 10 (or the racks 15) for the delivery of the latter to the interchange trolley 400.

As shown, the central cabinet 300 comprises a frame 303 bounding the housing compartment 304 which is entirely similar to that of the ward cabinet 100. A plurality of first supports 313, arranged at the point where a medicine storage sector G is located and inserted internally thereto, is configured to receive the medicines.

A plurality of second supports 313', arranged at the point where a tray storage sector H is located and again secured internally thereto, is configured to receive the trays 10. The supports 313, 313' may comprise, e.g., shelves, tops, etc.

As mentioned above, the trays 10 may be housed and stored inside the racks 15. In such a case, the second supports 313' are configured to also support the racks 15.

The manipulator 302 is configured to pick up and move the medicines from the medicine storage sector G to the tray storage sector H to insert them at least partly inside the trays 10. For this purpose, the cabinet 300 has a delivery opening 314 positioned at the point where a tray delivery sector I is located formed on one of the walls 305, 306, 307, 308 of the frame 303 and intended for the passage of the trays 10. More specifically, the delivery opening 314 is formed in the front wall 305 of the cabinet 100 that serves as a passageway for the trays 10, while the medicine storage sector G and the tray storage sector H are in a closed position to their respective supports 313 and 313' and associated with one of the walls of the cabinet 300.

Conveniently, the manipulator 302 of the central cabinet 300 comprises gripping means 312 for the grip of at least one tray 10 to move it from the tray storage sector H towards the tray delivery sector I in order to allow each tray 10 to pass through the opening 314.

The central cabinet 300 may also be provided with an additional delivery opening 330, which is larger than the delivery opening 314 and serves as a passageway for the interchange of the racks 15. Preferably, the additional delivery opening 330 is formed in the front wall 305 of the cabinet 300 next to the delivery opening 314 and closable, if necessary, by an automatic shutter door. To this end, the gripping means 312 are configured for the simultaneous grip of a plurality of trays 10, e.g. by directly picking up the racks 15 containing several trays 10 to move them from the tray storage sector H towards the tray delivery sector I in order to allow the racks 15 to pass through the additional delivery opening 330.

In summary, in the central cabinet 300, the medicines are picked up from the medicine storage sector G to be moved towards the tray storage sector H and placed in the trays 10 and, then, from the latter sector, the trays 10 are picked up with the medicines inside to be finally moved towards the tray delivery sector I, and then be delivered to the interchange trolley 400.

In a further embodiment of transfer of the trays 10 by means of the racks 15, in short, in the central cabinet 300 the medicines are picked up from the medicine storage sector G to be moved towards the tray storage sector H and inserted into the trays 10 inside the racks 15. Subsequently, from the latter sector, the racks 15 are picked up with the trays 10 and the medicines inside them to be moved towards the delivery sector I to be delivered to the interchange trolley 400. As a result, the transfer of the medicines through the racks 15 is faster with the possibility to move many more medicines and trays 10 at the same time.

In an additional embodiment not shown, the racks 15 are also manually transportable to be transferred towards the ward cabinet 100.

Preferably, the central cabinet 300 may also comprise a control unit communicating with the central control unit to allow the traceability of the medicines and thus know at all times where the medicine and/or the tray 10 is, to whom it was administered, from which trolley, etc. with the utmost effectiveness for inventory purposes and/or for possible recall actions.

As anticipated above, the system according to the invention provides an interchange trolley 400 intended to operate in conjunction with both the central cabinet 300 and the ward cabinet 100 for the passage and transfer of the trays 10 from the central cabinet 300 to the ward cabinet 100 and vice versa.

The interchange trolley 400 is quite similar to the ward trolley 200 but it is more simplified compared to the latter since it is not intended to be used for the final pickup of the single medicines but only as an interface for the interchange of the trays 10 (and therefore of the medicines) between the central cabinet 300 and the ward cabinet 100. The interchange trolley 400 may therefore be intended to store and transport both the single trays 10 and the racks 15 between the cabinets 100 and 300.

The interchange trolley 400 comprises a body 401 which bounds a housing compartment 421 similar to the compartment 221 of the ward trolley 200. Such a trolley 400 also has swivel castors and a handlebar 428 which can be gripped by an operator to drive and move the trolley 400.

Advantageously, the interchange trolley 400 may comprise an assisted driving device (not shown) configured to automatically adjust the speed of movement of the interchange trolley 400 based on the thrust force operated on the trolley by the operator. In particular, the assisted driving device comprises one or more motorized wheels to help moving the interchange trolley 400.

In accordance with one embodiment, the interchange trolley 400 may also be provided with a series of secondary accessories and of primary accessories entirely similar to those described with reference to the ward trolley 200 and intended to facilitate the work of healthcare providers. In this regard, the secondary accessories may, e.g., comprise a consumable holder assembly, waste containers, controlled access pockets and/or drawers, refrigerated drawer for temperature-controlled drugs, label printer, etc., while the primary accessories comprise, e.g., a scale, a camera, a display, processing means connected to the central ICT architecture, an operator identification system, etc.

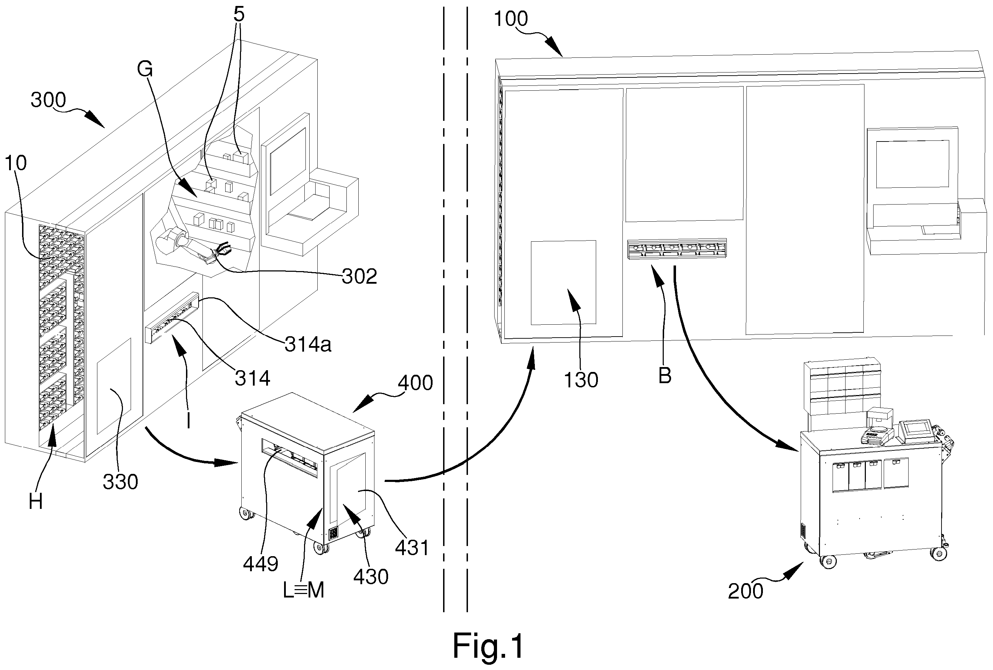

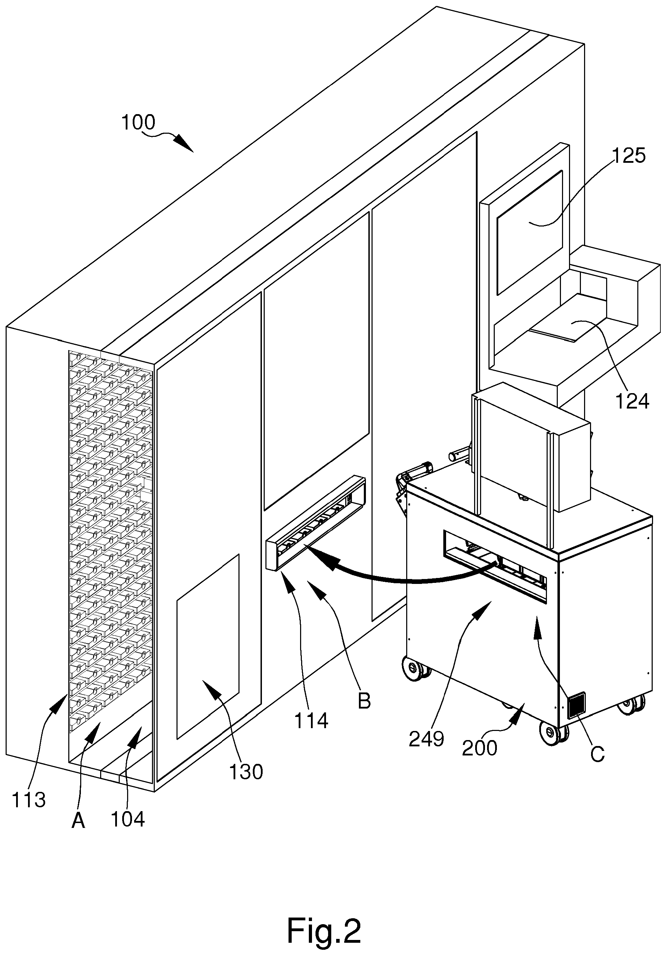

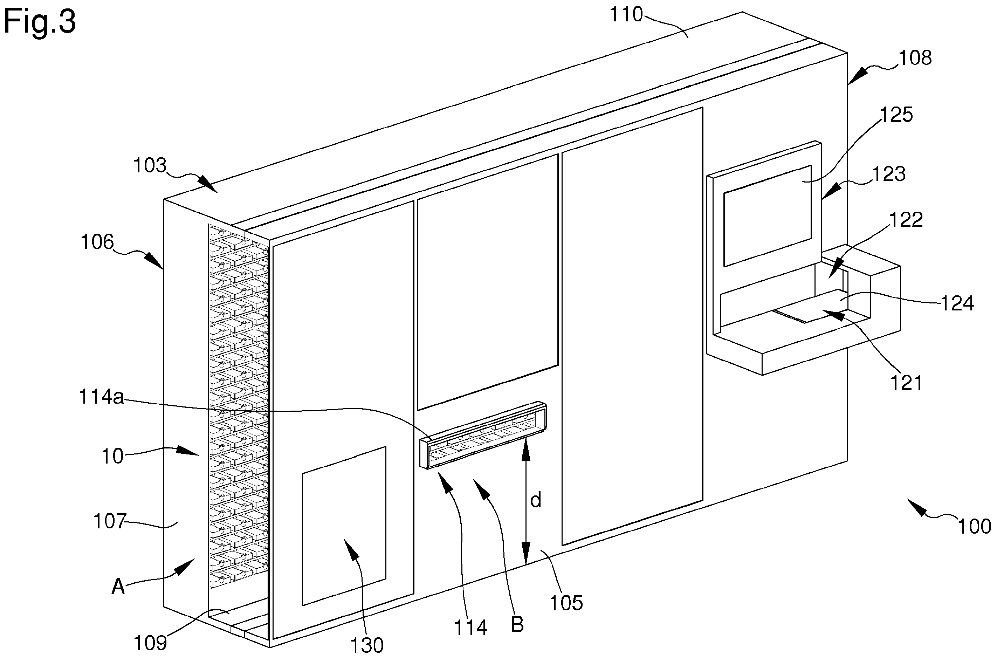

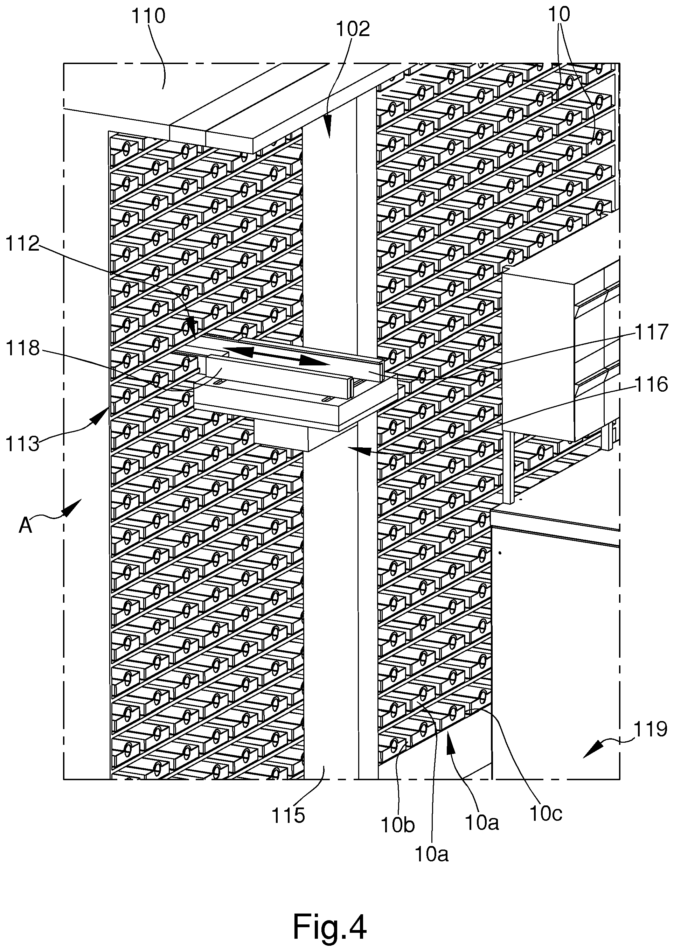

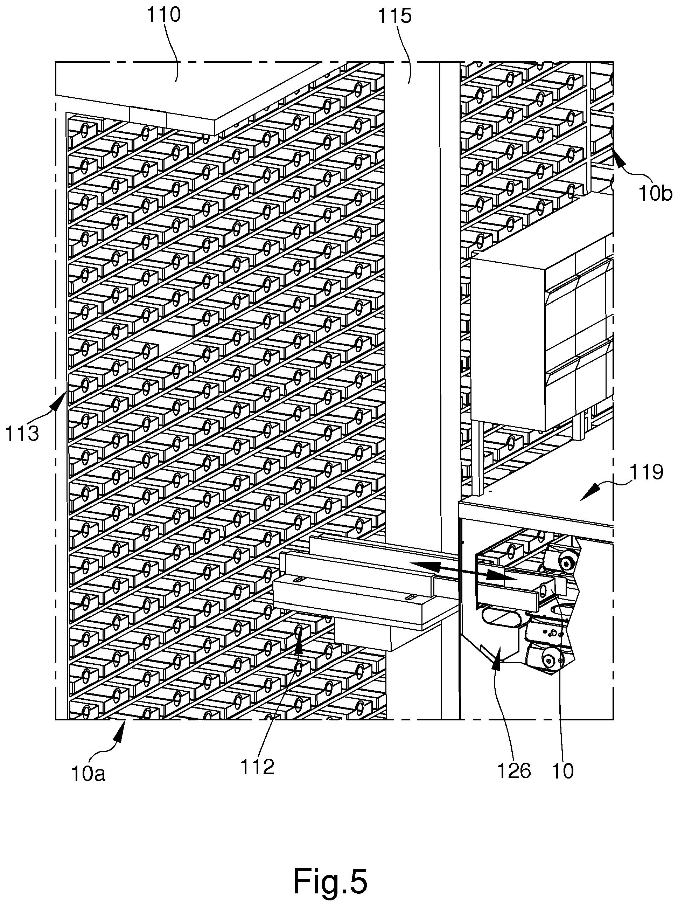

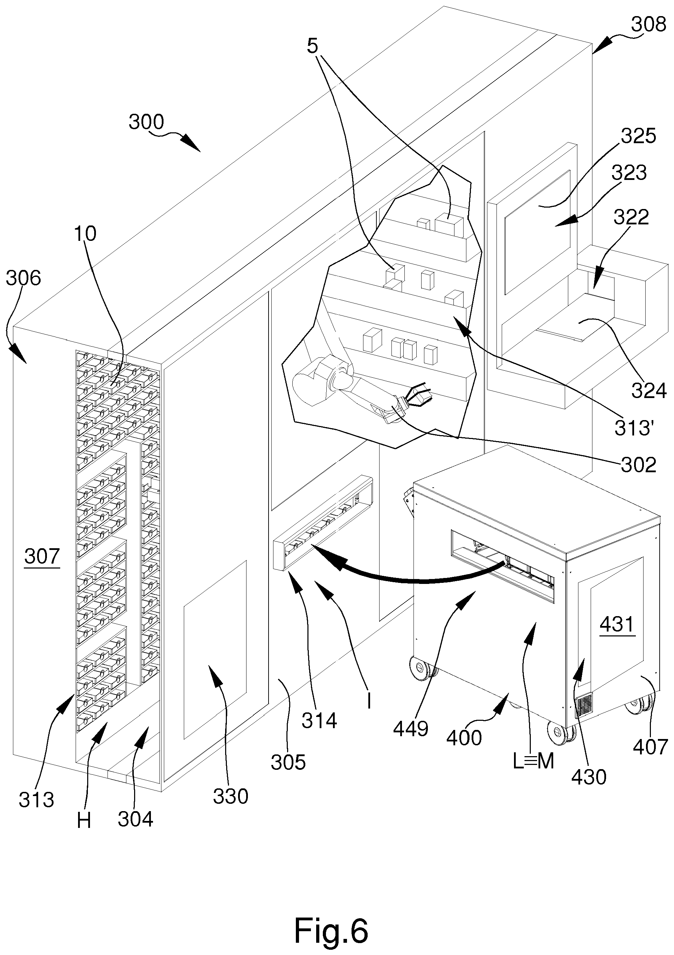

As observable from Figures 1 to 6, the interchange trolley 400 comprises at least one entry point L of at least one tray 10 into the interchange trolley 400 and at least one exit point M of at least one tray 10 from the interchange trolley 400.

Advantageously, the interchange trolley 400 is provided with a movement assembly 440, which is entirely similar to the movement assembly 240 of the ward trolley 200, and configured to move the trays 10 between the entry point L and the exit point M. The movement assembly 440 of the interchange trolley 400 may be of the type of a Cartesian robot or an anthropomorphic manipulator for the grip and transfer of the trays 10.

The interchange trolley 400 has at least one storage point N for the storage of the trays 10 before they are picked up by the movement assembly 440 to move them to the exit point M.

Preferably, the interchange trolley 400 may comprise a plurality of storage points N to store a large number of trays 10 inside it.

The movement of the trays 10 inside the interchange trolley 400 occurs as follows: each tray 10 coming from the central cabinet 300 is initially arranged at the entry point L and is inserted into the interchange trolley 400 through an interchange opening 449. The movement assembly 440 is then intended to pick up and move the tray 10 from the entry point L towards the storage point N to store it in the housing compartment 421.

Subsequently, when it is necessary to transfer the trays 10 from the central cabinet 300 to the ward cabinet 100, the movement assembly 440 is activated, e.g. by suitable processing means (not shown), to pick up each tray 10 from the storage point N and move them towards the unloading point D to deliver it to the movement assembly 102 of the ward cabinet 100 through the passage of the trays 10 through the openings 114 and 449, respectively. The replenishment of the trays 10 from the central cabinet 300 to the interchange trolley 400 occurs substantially similarly to what has been described with respect to the passage of the trays 10 between the ward trolley 200 and the ward cabinet 100. In particular, the transfer of the trays 10 is possible by at least partly joining the delivery opening 314 of the central cabinet 300 to the opening 449 of the interchange trolley 400 so that the manipulator 302 delivers the trays 10 to the movement assembly 440.

Similarly, the replenishment of the trays 10 from the interchange trolley 400 to the ward cabinet 100 occurs similarly to what has been described with reference to the passage of the trays 10 between the ward trolley 200 and the ward cabinet 100. In particular, the transfer occurs by at least partly joining the delivery opening 114 of the ward cabinet 100 to the opening 449 of the interchange trolley 400 so that the movement assembly 440 delivers the trays 10 to the movement assembly 102 of the ward cabinet 100.

As anticipated above, the central cabinet 300 is provided with a manipulator 302 configured to transfer the trays 10 towards the interchange trolley 400.

The manipulator 302 operates by shifting towards the interchange trolley 400 to allow the trays 10 to pass through the opening 314 of the central cabinet 300 towards the interchange opening 449 of the interchange trolley 400. Once the tray 10 has at least partly entered the interchange trolley 400, the manipulator 302 releases the tray 10 to be picked up by the movement assembly 440 of the interchange trolley 400 which takes over the tray 10 for the subsequent storage thereof inside the interchange trolley 400.

Conveniently, the interchange opening 449 of the interchange trolley 400 and the opening 314 of the central cabinet 300 are arranged at the same height above the ground to allow the transfer of the trays 10 between the central cabinet 300 and the interchange trolley 400.

Preferably, the interchange opening 449 of the interchange trolley 400, the opening 314 of the central cabinet 300 and the opening 114 of the ward cabinet 100 are arranged at the same height above the ground to allow the effective transfer of the trays 10 between the central cabinet 300 and the ward cabinet 100.

Conveniently, the interchange opening 449 of the interchange trolley 400 may have a width such that several trays 10 side by side may also be controlled at the same time. As a result, the dimension of the opening 314 of the central cabinet 300 may also be sized complementary and substantially similarly to the dimension of the interchange opening 449 of the interchange trolley 400.

In accordance with a further embodiment, the interchange trolley 400 is configured to receive a plurality of trays 10 at the same time. Several trays 10 in the interchange trolley 400 may be received by inserting one or more racks 15 picked up from the central cabinet 300.

For this purpose, the interchange trolley 400 is then provided with an additional delivery opening 430, which is larger than the delivery opening 449, which serves as a passageway for the interchange of the racks 15 between the central cabinet 300 and the interchange trolley 400. The additional delivery opening 430 is preferably formed in the side wall 407 of the interchange trolley 400 and closable/openable by a door 431.

Usefully, the movement assembly 440 may be configured to directly receive and handle the racks 15 according to techniques *per se* known.

In accordance with one embodiment, both the ward cabinet 100 and the central cabinet 300 may be provided with a charging unit for charging the batteries of the trolleys 200 and 400. To this end, one or more connectors (e.g., bayonet, magnetic, etc.) can be provided below the openings 114, 314 so that when the trolleys 200, 400 are joined to the cabinets 100, 300 for the passage of the trays 10, the charging of batteries is accomplished.

In accordance with a further embodiment, the central unit may control the driving of one or more trolleys 200, 400 when close to the cabinets 100, 300. For example, when at the end of a ward shift a trolley 200, 400 is to be restocked with medicines, a parking area for the trolleys may be provided in close proximity of the cabinets 100, 300, so as to be able to schedule the replenishment at predetermined times (for example at night). As a result, the central unit is programmed to control the unassisted replenishment of one or more trolleys by controlling the movement of the trolleys remotely, which are then brought closer to the cabinets for the subsequent transfer of the trays/medicines. For fine positioning operations, one or more proximity sensors may be provided both on the trolleys and on the cabinets.

An example of the possible operations and of the steps characterizing the system for the storage and automatic movement of the medicines according to the invention is described below.

The system may allow the realization of different operating conditions:
- condition of replenishment of the medicines in the central cabinet,
- condition of transfer of the medicines to the trays in the central cabinet,
- condition of transfer of the trays from the central cabinet to the ward cabinet,
- condition of storage of the trays in the ward cabinet,
- condition of pickup of the trays from the ward cabinet,
- condition of dispensing of the medicines in the wards.

The condition of replenishment of the medicines takes place by inserting, in a manner *per se* known, the medicines into the central cabinet 300. In detail, the central cabinet 300 receives the medicines coming from the various pharmaceutical companies in order to store them in the medicine storage sector G by, e.g., manual insertion or by means of an introduction unit of the medicines quite similar to that has been described with reference to the ward cabinet 100. The medicines may be placed by an operator, even in a random manner, on the manual or semi-automatic conveyor belt 324 provided in the proximity of the inlet port 321 of the central cabinet 300 to make them available downstream of the port 321 for their pickup by the manipulator 302 which will arrange and organize them on the supports 313. Preferably, the central control unit of the central cabinet can also be used by the operators by means of a suitable interface connected thereto (e.g., a display 325, a smart-phone, a tablet, etc.) to generate one or more signals to be sent to the central control unit. In particular, the operators might enter the data about the medicines to be inserted into the central cabinet 300 (or to be picked up) via the display 325 or directly with their smart-phone, tablet, and/or PC.

The condition of transfer of the medicines to trays in the central cabinet takes place when the manipulator picks up the medicines from the supports 313 to place them in the trays 10 which are in the tray storage sector H.

The condition of transfer of the trays from the central cabinet to the ward cabinet takes place by means of the manipulator 302 which picks up the trays 10 from the tray storage sector H to displace and move them towards the tray delivery sector I.

The condition of transfer of the trays from the central cabinet to the ward cabinet takes place by approaching the interchange trolley 400 to the central cabinet 300 at the point where the tray delivery sector I is located, by picking up the trays (entry point L) to store them inside (storage point N). The interchange trolley 400 is then moved towards the ward cabinet 100.

Once the ward cabinet 100 has been reached, there is the condition of transfer of the trays from the central cabinet to the ward cabinet wherein the interchange trolley is approached to the central cabinet 100 and the trays are displaced towards the exit point M.

The condition of storage of the trays into the ward cabinet takes place when the trays 10 are picked up from the exit point M of the interchange trolley 400, which substantially corresponds to the tray delivery position B in the ward cabinet. The trays 10 are then stored in the ward cabinet at the point where the tray storage position A is located.

Finally, the condition of dispensing of the medicines in the wards takes place when the ward trolley 200 picks up (entry area C) the trays 10 from the ward cabinet 100 to store them inside (storage area E). The interchange trolley 400 is then moved towards the inpatient rooms and the trays are then taken to the exit area C so that an operator can pick up the correct medicine to be administered to a patient.

The steps described above are quite similar in the event of the trays 10 being moved using the racks.

It has in practice been ascertained that the described invention achieves the intended objects, and in particular the fact is emphasized that by means of the system according to the present invention it is possible:
- to move the drugs inside the hospital between the central cabinets and the ward ones in an indirect way, that is not handling the packages and/or the blister packs, but operating only on special trays in order to create a univocal association between them and a predefined drug;
- to implement an automated transfer with one or more trolleys for the dispensing of medicines;
- to constantly track the drugs and the trays inside the hospitals to achieve a safe and efficient logistics flow to reduce human activities of low/no value for the patient,
- to allow the trolleys, while interfacing with the cabinets, to perform several activities simultaneously, such as e.g. the optimized exchange of the trays/racks containing the drugs, the charging of trolley's batteries and the automatic unassisted pickup/replenishment.

## Claims

1. System for the storage and movement of medicines comprising:
a plurality of trays (10) each intended to house at least one medicine to be administered to a patient,
a ward cabinet (100) for the storage of said plurality of trays (10) comprising:
- a frame (103) delimiting a housing compartment (104),
- a plurality of supports (113) each configured to receive at least one respective tray (10),
- an automatic movement assembly (102) arranged at least partly inside the housing compartment (104) for the movement of said plurality of trays (10) from a tray storage position (A) towards a tray delivery position (B),
- a delivery opening (114) positioned at the point where said tray delivery position (B) is located and formed on one of the walls (105, 106, 107, 108) of the frame (103) and intended for the passage of said trays (10),
**characterised in that** is further compsises
a ward trolley (200) intended to operate in conjunction with said ward cabinet (100) to exchange said trays (10) and comprising:
- a body (201) bounding a housing compartment (221) for the storage/receipt of said trays (10),
- a worktop (226) positioned above the housing compartment (221),
- an entry area (C) and an exit area (D) for the entry/exit of said tray from said ward trolley (200),
- an automatic movement assembly (240) arranged at least partly inside said housing compartment (221) and configured to receive said trays (10) from said ward cabinet (100) to store them inside and move them between at least said entry area (C) and said exit area (D) so as to make them available for a subsequent pickup to one or more operators,
- an entry opening (249) arranged at the point where said entry area (C) is located and adapted to allow the transfer of trays (10) from said ward cabinet (100) to said ward trolley (200) and vice versa.

2. System according to the preceding claim, wherein said movement assembly (102) of said ward cabinet (100) comprises gripping means (112) for the grip of at least one tray (10) between:
- a tray storage position (A), wherein the gripping means (112) are close to said support (113) to allow the association thereof with a respective tray (10), and
- said tray delivery position (B), wherein the gripping means (112) are close to the opening (114) to allow the passage of each tray (10) through said opening (114).

3. System according to any one of the preceding claims, wherein the movement assembly (102) of said ward cabinet (100) can be shifted along at least three directions (X, Y, Z).

4. System according to any one of the preceding claims, wherein said exit area (D) of said ward trolley (200) is located in a position close to said worktop (226).

5. System according to any one of the preceding claims, wherein said worktop (226) of said ward trolley (200) comprises at least one exit opening (242) arranged at the point where said exit area (D) is located and adapted to allow at least one tray (10) to exit said housing compartment (221).

6. System according to any one of the preceding claims, wherein said movement assembly (240) of said ward trolley (200) is provided with at least one shelf (241) adapted to receive and support said at least one tray (10) to move it inside said housing compartment (221).

7. System according to the preceding claim, wherein said ward trolley (200) comprises at least one storage area (E) for the storage of said trays (10), and wherein said movement assembly (240) comprises movement means (244) connected to said shelf (241) to move it at least between the entry area (C), the storage area (E) and the exit area (D).

8. System according to claim 6 or 7, wherein said ward trolley (200) comprises interfacing means (250) configured to operate in a receiving configuration, wherein they are adapted to receive said tray (10) to arrange it on said shelf (241), and a releasing configuration wherein they are adapted to release said tray (10) from said shelf (241).

9. System according to any one of the preceding claims, wherein said delivery opening (114) of said ward cabinet (100) and said entry opening (249) of said ward trolley (200) are located at a substantially corresponding height above the ground.

10. System according to any one of the preceding claims, comprising:
a central cabinet (300) for the storage of a plurality of medicines comprising:
- a frame (303) bounding a housing compartment (304),
- a plurality of first supports (313) configured to receive said medicines at the point where a medicine storage sector (G) is located,
- a plurality of second supports (313') configured to receive said trays (10) at the point where a tray storage sector (H) is located,
- an automatic movement assembly (302) arranged at least partly inside said housing compartment (304) for the grip and movement of said medicines towards said trays (10) to insert them at least partly inside them,
- an opening (314) positioned at the point where a tray delivery sector (I) is located, which opening is formed on one of the walls (305, 306, 307, 308) of the frame (303) and intended for the passage of said trays (10).

11. System according to the preceding claim, wherein said manipulator (302) of said central cabinet (300) comprises gripping means (312) for the grip of at least one tray (10) to move them from said tray storage sector (H) towards said tray delivery sector (I) in order to allow the passage of each tray (10) through said opening (314).

12. System according to claim 10, wherein said manipulator (302) of said central cabinet (300) comprises gripping means (312) for the simultaneous grip of a plurality of trays (10) to move them from said tray storage sector (H) towards said tray delivery sector (I) to allow the passage of said plurality of trays through said opening (314).

13. System according to the preceding claim, comprising:
an interchange trolley (400) intended to operate in conjunction with said ward cabinet (100) and said central cabinet (300) to transfer said trays (10) between them and comprising:
- a body (401) bounding a housing compartment (421) for the storage/receipt of said trays (10),
- an entry point (L) and an exit point (M) of said at least one tray (10) from said central cabinet (300),
- an automatic movement assembly (440) arranged at least partly inside said housing compartment (421) and configured to receive said trays (10) from said central cabinet (300) to store them inside and move them between at least said entry point (L) and said exit point (M),
- at least one interchange opening (449) adapted to allow the transfer of said trays (10) from said central cabinet (300) to said ward cabinet (100) and vice versa.

14. System according to the preceding claim, wherein said at least one interchange opening (449) of said interchange trolley (400) is positioned at the point where said exit point (M) is located.

15. System according to claim 13 or 14, wherein said at least one interchange opening (449) of said interchange trolley (400) and said delivery opening (114) of said ward cabinet (100) are located at a substantially corresponding height above the ground.

## Patentansprüche

1. System für die Lagerung und den Transport von Medikamenten, umfassend:
eine Mehrzahl von Tabletts (10), die jeweils zur Aufnahme mindestens eines einem Patienten zu verabreichenden Medikaments bestimmt sind,
einen Stationsschrank (100) für die Aufbewahrung der Mehrzahl von Tabletts (10), umfassend
- einen Rahmen (103), der ein Gehäuseabteil (104) abgrenzt,
- eine Mehrzahl von Trägern (113), die jeweils dazu ausgebildet sind, mindestens ein jeweiliges Tablett (10) aufzunehmen,
- eine automatische Bewegungsbaugruppe (102), die zumindest teilweise innerhalb des Gehäuseabteils (104) angeordnet ist, um die Mehrzahl der Tabletts (10) von einer Tablett-Lagerposition (A) zu einer Tablett-Ausgabeposition (B) zu bewegen,
- eine Abgabeöffnung (114), die an dem Punkt positioniert ist, an dem sich die Tablett-Ausgabeposition (B) befindet, und die an einer der Wände (105, 106, 107, 108) des Rahmens (103) ausgebildet ist und für den Durchgang der Tablets (10) vorgesehen ist,
**dadurch gekennzeichnet, dass** es außerdem umfasst
einen Stationswagen (200), der dazu bestimmt ist, in Verbindung mit dem Stationsschrank (100) zu arbeiten, um die Tabletts (10) auszutauschen, und der umfasst:
- einen Körper (201), der ein Gehäuseabteil (221) für die Lagerung/Aufnahme der Tabletts (10) begrenzt,
- eine Arbeitsplatte (226), die oberhalb des Gehäuseabteils (221) angeordnet ist,
- einen Eingangsbereich (C) und einen Ausgangsbereich (D) für den Eingang/Ausgang des Tabletts von dem Stationswagen (200),
- eine automatische Bewegungsbaugruppe (240), die zumindest teilweise innerhalb des Gehäuseabteils (221) angeordnet und dazu ausgebildet ist, die Tabletts (10) aus dem Stationsschrank (100) aufzunehmen, um sie darin zu lagern und sie zumindest zwischen dem Eingangsbereich (C) und dem Ausgangsbereich (D) zu bewegen, um sie für eine anschließende Entnahme durch eine oder mehrere Bedienpersonen verfügbar zu machen,
- eine Eingangsöffnung (249), die an dem Punkt angeordnet ist, an dem sich der Eingangsbereich (C) befindet, und die dazu ausgebildet ist, den Transfer von Tabletts (10) von dem Stationsschrank (100) zu dem Stationswagen (200) und umgekehrt zu ermöglichen.

2. System nach dem vorhergehenden Anspruch, wobei die Bewegungsbaugruppe (102) des Stationsschranks (100) Greifmittel (112) umfasst, zum Greifen von mindestens einem Tablett (10) zwischen:
- einer Tablett-Lagerposition (A), in der sich die Greifmittel (112) in der Nähe des Trägers (113) befinden, um die Zuordnung desselben zu einem jeweiligen Tablett (10) zu ermöglichen, und
- der Tablett-Ausgabeposition (B), in der sich die Greifmittel (112) in der Nähe der Öffnung (114) befinden, um den Durchgang jedes Tabletts (10) durch die Öffnung (114) zu ermöglichen.

3. System nach einem der vorhergehenden Ansprüche, wobei die Bewegungsbaugruppe (102) des Stationsschranks (100) in mindestens drei Richtungen (X, Y, Z) verschoben werden kann.

4. System nach einem der vorangehenden Ansprüche, wobei der Ausgangsbereich (D) des Stationswagens (200) in einer Position nahe der Arbeitsplatte (226) angeordnet ist.

5. System nach einem der vorhergehenden Ansprüche, wobei die Arbeitsplatte (226) des Stationswagens (200) mindestens eine Ausgangsöffnung (242) aufweist, die an der Stelle angeordnet ist, an der sich der Ausgangsbereich (D) befindet, und die dazu ausgebildet ist, mindestens ein Tablett (10) aus dem Gehäuseabteil (221) austreten zu lassen.

6. System nach einem der vorhergehenden Ansprüche, bei dem die Bewegungsbaugruppe (240) des Stationswagens (200) mit mindestens einem Regal (241) versehen ist, das dazu ausgebildet ist ist, das mindestens eine Tablett (10) aufzunehmen und zu tragen, um es in dem Gehäuseabteil (221) zu bewegen.

7. System nach dem vorhergehenden Anspruch, wobei der Stationswagen (200) mindestens einen Lagerbereich (E) für die Lagerung der Tabletts (10) umfasst, und wobei die Bewegungsbaugruppe (240) Bewegungsmittel (244) umfasst, die mit dem Regal (241) verbunden sind, um es zumindest zwischen dem Eingangsbereich (C), dem Lagerbereich (E) und dem Ausgangsbereich (D) zu bewegen.

8. System nach Anspruch 6 oder 7, wobei der Stationswagen (200) Schnittstellenmittel (250) umfasst, die so konfiguriert sind, dass sie in einer Aufnahmekonfiguration arbeiten, in der sie dazu ausgebildet sind, das Tablett (10) aufzunehmen, um es auf dem Regal (241) anzuordnen, und in einer Freigabekonfiguration, in der sie dazu ausgebildet sind, das Tablett (10) von dem Regal (241) freizugeben.

9. System nach einem der vorhergehenden Ansprüche, wobei die Abgabeöffnung (114) des Stationsschranks (100) und die Eingangsöffnung (249) des Stationswagens (200) auf einer im Wesentlichen entsprechenden Höhe über dem Boden angeordnet sind.

10. System nach einem der vorhergehenden Ansprüche, umfassend:
einen zentralen Schrank (300) zur Aufbewahrung einer Mehrzahl von Medikamenten, umfassend:
- einen Rahmen (303), der ein Gehäuseabteil (304) begrenzt,
- eine Mehrzahl von ersten Trägern (313), die dazu ausgebildet sind, die Medikamente an der Stelle aufzunehmen, an der sich ein Medikamenten-Lagersektor (G) befindet,
- eine Mehrzahl von zweiten Trägern (313'), die dazu ausgebildet sind, die Tabletts (10) an dem Punkt aufzunehmen, an dem sich ein Tablett-Lagersektor (H) befindet,
- eine automatische Bewegungsbaugruppe (302), die zumindest teilweise innerhalb des Gehäuseabteils (304) angeordnet ist, um die Medikamente zu ergreifen und in Richtung der Tabletts (10) zu bewegen, um sie zumindest teilweise in diese einzuführen,
- eine Öffnung (314), die an der Stelle positioniert ist, an der sich ein Tablett-Ausgabesektor (I) befindet, wobei die Öffnung an einer der Wände (305, 306, 307, 308) des Rahmens (303) ausgebildet ist und für den Durchgang der Tabletts (10) bestimmt ist.

11. System nach dem vorhergehenden Anspruch, bei dem der Manipulator (302) des zentralen Schranks (300) Greifmittel (312) zum Ergreifen mindestens eines Tabletts (10) umfasst, um dieses aus dem Tablett-Lagersektor (H) in Richtung des Tablett-Ausgabesektors (I) zu bewegen, um den Durchgang jedes Tabletts (10) durch die Öffnung (314) zu ermöglichen.

12. System nach Anspruch 10, wobei der Manipulator (302) des zentralen Schranks (300) Greifmittel (312) zum gleichzeitigen Greifen einer Mehrzahl von Tabletts (10) umfasst, um diese aus dem Tablett-Lagersektor (H) in Richtung des Tablett-Ausgabesektors (I) zu bewegen, um den Durchgang der Mehrzahl von Tablets durch die Öffnung (314) zu ermöglichen.

13. System nach dem vorhergehenden Anspruch, umfassend:
einen Austauschwagen (400), der dazu bestimmt ist, in Verbindung mit dem Stationsschrank (100) und dem zentralen Schrank (300) zu arbeiten, um die Tabletts (10) zwischen ihnen zu transportieren, und der umfasst:
- einen Körper (401), der ein Gehäuseabteil (421) für die Lagerung/Aufnahme der Tabletts (10) begrenzt,
- einen Eingangspunkt (L) und einen Ausgangspunkt (M) für das mindestens eine Tablett (10) aus dem zentralen Schrank (300),
- eine automatische Bewegungsbaugruppe (440), die zumindest teilweise innerhalb des Gehäuseabteils (421) angeordnet und dazu ausgebildet ist, die Tabletts (10) aus dem zentralen Schrank (300) aufzunehmen, um sie darin zu lagern und sie zwischen zumindest dem Eingangspunkt (L) und dem Ausgangspunkt (M) zu bewegen,
- mindestens eine Austauschöffnung (449), die dazu ausgebildet ist, den Transfer der Tabletts (10) von dem zentralen Schrank (300) zu dem Stationsschrank (100) und umgekehrt zu ermöglichen.

14. System nach dem vorhergehenden Anspruch, wobei die mindestens eine Austauschöffnung (449) des Austauschwagens (400) an dem Punkt angeordnet ist, an dem sich der Ausgangspunkt (M) befindet.

15. System nach Anspruch 13 oder 14, wobei die mindestens eine Austauschöffnung (449) des Austauschwagens (400) und die Abgabeöffnung (114) des Stationsschranks (100) in einer im Wesentlichen gleichen Höhe über dem Boden angeordnet sind.

## Revendications

1. - Système pour le stockage et le déplacement de médicaments, comprenant :
une pluralité de plateaux (10) destinés chacun à recevoir au moins un médicament à administrer à un patient ;
une armoire de service (100) pour le stockage de ladite pluralité de plateaux (10) comprenant :
- un cadre (103) délimitant un compartiment de réception (104) ;
- une pluralité de supports (113) configurés chacun pour recevoir au moins un plateau respectif (10) ;
- un ensemble de déplacement automatique (102) disposé au moins en partie à l'intérieur du compartiment de réception (104) pour le déplacement de ladite pluralité de plateaux (10) d'une position de stockage des plateaux (A) vers une position de distribution des plateaux (B) ;
- une ouverture de distribution (114) positionnée à l'endroit où se trouve ladite position de distribution des plateaux (B) et formée sur l'une des parois (105, 106, 107, 108) du cadre (103) et destinée au passage desdits plateaux (10),
**caractérisé par le fait qu'**il comprend en outre :
un chariot de service (200) destiné à fonctionner conjointement avec ladite armoire de service (100) pour échanger lesdits plateaux (10) et comprenant :
- un corps (201) délimitant un compartiment de réception (221) pour le stockage/la réception desdits plateaux (10) ;
- un plan de travail (226) positionné au-dessus du compartiment de réception (221) ;
- une zone d'entrée (C) et une zone de sortie (D) pour l'entrée/la sortie dudit plateau à partir dudit chariot de service (200),
- un ensemble de déplacement automatique (240) disposé au moins en partie à l'intérieur dudit compartiment de réception (221) et configuré pour recevoir lesdits plateaux (10) en provenance de ladite armoire de service (100) pour les stocker à l'intérieur et les déplacer entre au moins ladite zone d'entrée (C) et ladite zone de sortie (D) de manière à les mettre à disposition pour un ramassage ultérieur à un ou plusieurs opérateurs ;
- une ouverture d'entrée (249) disposée à l'endroit où se trouve ladite zone d'entrée (C) et apte à permettre le transfert de plateaux (10) de ladite armoire de service (100) audit chariot de service (200) et inversement.

2. - Système selon la revendication précédente, dans lequel ledit ensemble de déplacement (102) de ladite armoire de service (100) comprend des moyens de préhension (112) pour la préhension d'au moins un plateau (10) entre :
- une position de stockage des plateaux (A), dans laquelle les moyens de préhension (112) sont proches dudit support (113) pour permettre l'association de celui-ci avec un plateau respectif (10), et
- ladite position de distribution des plateaux (B), dans laquelle les moyens de préhension (112) sont proches de l'ouverture (114) pour permettre le passage de chaque plateau (10) à travers ladite ouverture (114).

3. - Système selon l'une quelconque des revendications précédentes, dans lequel l'ensemble de déplacement (102) de ladite armoire de service (100) peut être déplacé selon au moins trois directions (X, Y, Z).

4. - Système selon l'une quelconque des revendications précédentes, dans lequel ladite zone de sortie (D) dudit chariot de service (200) est située dans une position proche dudit plan de travail (226).

5. - Système selon l'une quelconque des revendications précédentes, dans lequel ledit plan de travail (226) dudit chariot de service (200) comprend au moins une ouverture de sortie (242) disposée à l'endroit où se trouve ladite zone de sortie (D) et apte à permettre à au moins un plateau (10) de sortir dudit compartiment de réception (221).

6. - Système selon l'une quelconque des revendications précédentes, dans lequel ledit ensemble de déplacement (240) dudit chariot de service (200) comporte au moins une tablette (241) apte à recevoir et supporter ledit au moins un plateau (10) afin de le déplacer à l'intérieur dudit compartiment de réception (221).

7. - Système selon la revendication précédente, dans lequel ledit chariot de service (200) comprend au moins une zone de stockage (E) pour le stockage desdits plateaux (10), et dans lequel ledit ensemble de déplacement (240) comprend des moyens de déplacement (244) reliés à ladite tablette (241) pour la déplacer au moins entre la zone d'entrée (C), la zone de stockage (E) et la zone de sortie (D).

8. - Système selon la revendication 6 ou 7, dans lequel ledit chariot de service (200) comprend des moyens d'interfaçage (250) configurés pour fonctionner dans une configuration de réception, dans laquelle ils sont aptes à recevoir ledit plateau (10) pour le disposer sur ladite tablette (241), et une configuration de libération dans laquelle ils sont aptes à libérer ledit plateau (10) de ladite tablette (241).

9. - Système selon l'une quelconque des revendications précédentes, dans lequel ladite ouverture de distribution (114) de ladite armoire de service (100) et ladite ouverture d'entrée (249) dudit chariot de service (200) sont situées à une hauteur sensiblement correspondante au-dessus du sol.

10. - Système selon l'une quelconque des revendications précédentes, comprenant :
une armoire centrale (300) pour le stockage d'une pluralité de médicaments, comprenant :
- un cadre (303) délimitant un compartiment de réception (304) ;
- une pluralité de premiers supports (313) configurés pour recevoir lesdits médicaments à l'endroit où se trouve un secteur de stockage de médicaments (G) ;
- une pluralité de seconds supports (313') configurés pour recevoir lesdits plateaux (10) à l'endroit où se trouve un secteur de stockage des plateaux (H) ;
- un ensemble de déplacement automatique (302) disposé au moins en partie à l'intérieur dudit compartiment de réception (304) pour la préhension et le déplacement desdits médicaments vers lesdits plateaux (10) afin de les introduire au moins en partie à l'intérieur de ceux-ci ;
- une ouverture (314) positionnée à l'endroit où se trouve un secteur de distribution des plateaux (I), laquelle ouverture est formée sur l'une des parois (305, 306, 307, 308) du cadre (303) et destinée au passage desdits plateaux (10).

11. - Système selon la revendication précédente, dans lequel ledit manipulateur (302) de ladite armoire centrale (300) comprend des moyens de préhension (312) pour la préhension d'au moins un plateau (10) pour le déplacer dudit secteur de stockage des plateaux (H) vers ledit secteur de distribution des plateaux (I) afin de permettre le passage de chaque plateau (10) à travers ladite ouverture (314).

12. - Système selon la revendication 10, dans lequel ledit manipulateur (302) de ladite armoire centrale (300) comprend des moyens de préhension (312) pour la préhension simultanée d'une pluralité des plateaux (10) pour les déplacer dudit secteur de stockage des plateaux (H) vers ledit secteur de distribution des plateaux (I) afin de permettre le passage de ladite pluralité de plateaux à travers ladite ouverture (314).

13. - Système selon la revendication précédente, comprenant :
un chariot d'échange (400) destiné à fonctionner conjointement avec ladite armoire de service (100) et ladite armoire centrale (300) pour transférer lesdits plateaux (10) entre elles et comprenant :
- un corps (401) délimitant un compartiment de réception (421) pour le stockage/la réception desdits plateaux (10) ;
- un point d'entrée (L) et un point de sortie (M) dudit au moins un plateau (10) à partir de ladite armoire centrale (300) ;
- un ensemble de déplacement automatique (440) disposé au moins en partie à l'intérieur dudit compartiment de réception (421) et configuré pour recevoir lesdits plateaux (10) en provenance de ladite armoire centrale (300) pour les stocker à l'intérieur et les déplacer entre au moins ledit point d'entrée (L) et ledit point de sortie (M) ;
- au moins une ouverture d'échange (449) apte à permettre le transfert desdits plateaux (10) de ladite armoire centrale (300) à ladite armoire de service (100) et inversement.

14. - Système selon la revendication précédente, dans lequel ladite au moins une ouverture d'échange (449) dudit chariot d'échange (400) est positionnée à l'endroit où se trouve ledit point de sortie (M).

15. - Système selon la revendication 13 ou 14, dans lequel ladite au moins une ouverture d'échange (449) dudit chariot d'échange (400) et ladite ouverture de distribution (114) de ladite armoire de service (100) sont situées à une hauteur sensiblement correspondante au-dessus du sol.
